# EUROPÄISCHE PATENTSCHRIFT

(11) **EP 4 226 271 B1**
(45) Veröffentlichungstag und Bekanntmachung des Hinweises auf die Patenterteilung: **09.09.2026**
(21) Anmeldenummer: 21787397.5
(22) Anmeldetag: 05.10.2021
(51) Int. Cl.: G06K 3/00, G06Q 10/087

(54) **VERFAHREN ZUM ANBRINGEN EINER ANZAHL VON EINDEUTIGEN IDENTIFIZIERUNGSCODES AUS EINER MENGE VON EINDEUTIGEN IDENTIFIZIERUNGSCODES AN EINER ANZAHL VON GEGENSTÄNDEN**
METHOD FOR ATTACHING A NUMBER OF UNIQUE IDENTIFICATION CODES FROM A SET OF UNIQUE IDENTIFICATION CODES TO A NUMBER OF OBJECTS
PROCÉDÉ POUR FIXER UN CERTAIN NOMBRE DE CODES D'IDENTIFICATION UNIQUES À PARTIR D'UN ENSEMBLE DE CODES D'IDENTIFICATION UNIQUES À UN CERTAIN NOMBRE D'OBJETS

(30) Priorität: 12.10.2020 DE 102020212842
(43) Veröffentlichungstag der Anmeldung: 16.08.2023
(73) Patentinhaber: SCRIBOS GmbH, 69126 Heidelberg (DE)
(72) Erfinder: SCHEIBENSTOCK, Steffen, 70178 Stuttgart (DE)
(74) Vertreter: Zinsinger, Norbert
(86) Internationale Anmeldenummer: PCT/EP2021/077447
(87) Internationale Veröffentlichungsnummer: WO 2022/078820

(56) Entgegenhaltungen:
- US-A- 4 299 073
- US-A1- 2009 251 294

## Beschreibung

Die vorliegende Erfindung betrifft ein Verfahren zum Anbringen einer Anzahl von eindeutigen Identifizierungscodes aus einer Menge von eindeutigen Identifizierungscodes an einer Anzahl von Gegenständen.

Verfahren zum Anbringen einer Anzahl von eindeutigen Identifizierungscodes aus einer Menge von eindeutigen Identifizierungscodes an einer Anzahl von Gegenständen sind aus dem Stand der Technik bekannt. Bei diesen aus dem Stand der Technik bekannten Verfahren wird die Anzahl von eindeutigen Identifizierungscodes aus der Menge von eindeutigen Identifizierungscodes an der Anzahl von Gegenständen so angebracht, dass nach dem Anbringen der eindeutigen Identifizierungscodes an jedem Gegenstand ein eindeutiger Identifizierungscode angebracht ist.

Generell ist es wünschenswert, einfach und schnell zu ermitteln, welche eindeutigen Identifizierungscodes an den Gegenständen angebracht sind.

Es ist daher Aufgabe der vorliegenden Erfindung, eine einfache und schnelle Bestimmung bereitzustellen, welche eindeutigen Identifizierungscodes an den Gegenständen angebracht sind.

Gemäß einem ersten Aspekt der Erfindung wird die genannte Aufgabe durch ein Verfahren mit den Merkmalen des Patentanspruchs 1 gelöst. Das Verfahren ist zum Anbringen einer Anzahl von eindeutigen Identifizierungscodes aus einer Menge von eindeutigen Identifizierungscodes an einer Anzahl von Gegenständen angepasst. Die eindeutigen Identifizierungscodes unterscheiden sich voneinander. Die eindeutigen Identifizierungscodes bilden eine vorgegebene Codereihenfolge, die einen ersten eindeutigen Identifizierungscode und einen letzten eindeutigen Identifizierungscode definiert. Das Verfahren weist die folgenden Schritte auf: Anbringen der Anzahl von eindeutigen Identifizierungscodes aus der Menge von eindeutigen Identifizierungscodes an der Anzahl von Gegenständen, sodass an jedem Gegenstand ein eindeutiger Identifizierungscode angebracht wird; Optisches Erfassen eines eindeutigen Identifizierungscodes aus der Menge von eindeutigen Identifizierungscodes mithilfe einer Erfassungseinheit und Erfassen einer Zusatzinformation; Rückschließen auf die angebrachten eindeutigen Identifizierungscodes anhand des optisch erfassten eindeutigen Identifizierungscodes und der Zusatzinformation.

Das Verfahren ist zum Anbringen einer Anzahl von eindeutigen Identifizierungscodes aus einer Menge von eindeutigen Identifizierungscodes an einer Anzahl von Gegenständen angepasst. Die eindeutigen Identifizierungscodes unterscheiden sich voneinander. Jeder Identifizierungscode aus der Menge von eindeutigen Identifizierungscodes kann aus einer Zeichenfolge bestehen. Die Zeichenfolge kann wiederum Buchstaben und/oder Ziffern aufweisen. Jeder Identifizierungscode aus der Menge von eindeutigen Identifizierungscodes ist eindeutig und unterscheidet sich durch seine Eindeutigkeit von anderen eindeutigen Identifizierungscodes, insbesondere von den anderen eindeutigen Identifizierungscodes aus der Menge von eindeutigen Identifizierungscodes. Dies gilt für jeden der Identifizierungscodes, sodass sich die eindeutigen Identifizierungscodes voneinander unterscheiden. Insbesondere ist vorgesehen, dass keine zwei eindeutigen Identifizierungscodes existieren, wobei die zwei eindeutigen Identifizierungscodes identisch sind. Jeder eindeutige Identifizierungscode der eindeutigen Identifizierungscodes kann auch als unique identifier (UID) oder unique ID bezeichnet werden.

Bevorzugt ist jeder Gegenstand der Anzahl von Gegenständen ein Produkt, sodass die Anzahl von eindeutigen Identifizierungscodes an einer Anzahl von Produkten angebracht werden. Alternativ bevorzugt ist jeder Gegenstand der Anzahl von Gegenständen eine Verpackung eines Produkts, sodass die Anzahl von eindeutigen Identifizierungscodes an einer Anzahl von Verpackungen angebracht werden.

Bevorzugt entspricht die Anzahl von eindeutigen Identifizierungscodes der Menge von eindeutigen Identifizierungscodes. Für den Fall, dass die Anzahl von eindeutigen Identifizierungscodes der Menge von eindeutigen Identifizierungscodes entspricht, können die gesamten eindeutigen Identifizierungscodes aus der Menge von eindeutigen Identifizierungscodes an der Anzahl von Gegenständen angebracht werden. Alternativ kann die Anzahl von eindeutigen Identifizierungscodes auch kleiner als die Menge von eindeutigen Identifizierungscodes sein. Für den Fall, dass die Anzahl von eindeutigen Identifizierungscodes kleiner als die Menge von eindeutigen Identifizierungscodes ist, kann vorgesehen sein, dass ein Teil der Menge von eindeutigen Identifizierungscodes, die nicht Teil der Anzahl von eindeutigen Identifizierungscodes ist, an anderen Gegenständen angebracht wird, die nicht Teil der Anzahl von Gegenständen sind. Insbesondere kann der Teil der Menge von eindeutigen Identifizierungscodes, der nicht Teil der Anzahl von eindeutigen Identifizierungscodes ist, an anderen Gegenständen, die nicht Teil der Anzahl von Gegenständen sind, - vor, nach und/oder während des Anbringens der Anzahl von eindeutigen Identifizierungscodes aus der Menge von eindeutigen Identifizierungscodes an der Anzahl von Gegenständen - angebracht werden, sodass die Menge von eindeutigen Identifizierungscodes besonders zeiteffizient an den Gegenständen angebracht werden kann.

Bevorzugt entspricht die Anzahl von eindeutigen Identifizierungscodes der Anzahl von Gegenständen. Wenn die Anzahl von eindeutigen Identifizierungscodes der Anzahl von Gegenständen entspricht, kann für jeden Gegenstand genau ein eindeutiger Identifizierungscode vorgesehen sein und an jedem Gegenstand genau ein eindeutiger Identifizierungscode angebracht werden, sodass die Anzahl von eindeutigen Identifizierungscodes für eine vorgegebene Anzahl von Gegenständen geringgehalten werden kann. Eine geringe Anzahl von eindeutigen Identifizierungscodes kann insbesondere zu einem besonders ressourcenschonenden Verfahren ermöglichen. Ein besonders ressourcenschonendes Verfahren kann beispielsweise dadurch bereitgestellt werden, dass auf jeden Gegenstand lediglich ein eindeutiger Identifizierungscode aufgebracht wird. Eine weitere Möglichkeit das Verfahren besonders ressourcenschonend auszugestalten ist, dass lediglich ein eindeutiger Identifizierungscode pro Gegenstand optisch erfasst werden muss. Außerdem kann das Verfahren besonders ressourcenschonend sein, da ein eindeutiger Identifizierungscode pro Gegenstand gespeichert, übermittelt und/oder verarbeitet werden muss. Alternativ kann die Anzahl von eindeutigen Identifizierungscodes auch größer als die Anzahl von Gegenständen sein. Wenn die Anzahl von eindeutigen Identifizierungscodes größer als die Anzahl von Gegenständen ist, können an zumindest einem der Gegenstände mindestens zwei eindeutige Identifizierungscodes angebracht werden.

Die eindeutigen Identifizierungscodes bilden eine vorgegebene Codereihenfolge, die einen ersten eindeutigen Identifizierungscode und einen letzten eindeutigen Identifizierungscode definiert. Die eindeutigen Identifizierungscodes bilden eine Codereihenfolge, die einen ersten eindeutigen Identifizierungscode und einen letzten eindeutigen Identifizierungscode definiert. Die Anzahl von eindeutigen Identifizierungscodes umfasst bevorzugt mindestens zwei eindeutige Identifizierungscodes, nämlich den ersten eindeutigen Identifizierungscode und den letzten eindeutigen Identifizierungscode. Bevorzugt umfasst die Anzahl von eindeutigen Identifizierungscodes eine Vielzahl von eindeutigen Identifizierungscodes, nämlich den ersten eindeutigen Identifizierungscode, den letzten eindeutigen Identifizierungscode sowie mindestens einen weiteren eindeutigen Identifizierungscode. Insbesondere ist vorgesehen, dass die Codereihenfolge zwischen dem ersten eindeutigen Identifizierungscode und dem letzten eindeutigen Identifizierungscode mindestens einen weiteren eindeutigen Identifizierungscode definiert. Die Codereihenfolge definiert den ersten eindeutigen Identifizierungscode und den letzten eindeutigen Identifizierungscode. Bevorzugt definiert die Codereihenfolge für jeden eindeutigen Identifizierungscode der Menge von eindeutigen Identifizierungscodes eine Position des eindeutigen Identifizierungscodes innerhalb der Menge von eindeutigen Identifizierungscodes, sodass jedem eindeutigen Identifizierungscode eine bestimmte Position in der Codereihenfolge zugeordnet ist. Der erste eindeutige Identifizierungscode kann beispielsweise die erste Position in der Codereihenfolge einnehmen. Der letzte eindeutige Identifizierungscode kann beispielsweise die letzte Position in der Codereihenfolge einnehmen. Für den Fall, dass beispielsweise die Anzahl von eindeutigen Identifizierungscodes 1000 eindeutige Identifizierungscodes aufweist, kann der letzte eindeutige Identifizierungscode die tausendste Position in der Codereihenfolge einnehmen. Die zweite bis neunhundertneunundneunzigste Positionen werden dann entsprechend von den mindestens einen weiteren eindeutigen Identifizierungscodes in der Codereihenfolge eingenommen. Insbesondere können durch die Codereihenfolge die eindeutigen Identifizierungscodes der Menge von eindeutigen Identifizierungscodes in ein Verhältnis zueinander gebracht werden.

Bevorzugt bilden die eindeutigen Identifizierungscodes die Codereihenfolge derart, dass die eindeutigen Identifizierungscodes durch ihren Inhalt selbst eine Reihenfolge vorgeben, die der Codereihenfolge entspricht. Beispielsweise können die eindeutigen Identifizierungscodes Ziffern aufweisen, die für jeden eindeutigen Identifizierungscode eine Zahl definieren und die Zahlen der eindeutigen Identifizierungscodes die Codereihenfolge definieren. In dem Fall, dass die eindeutigen Identifizierungscodes Ziffern aufweisen, die für jeden eindeutigen Identifizierungscode eine Zahl definieren und die Zahlen der eindeutigen Identifizierungscodes die Codereihenfolge definieren, kann die Codereihenfolge auch als numerisch definierte Codereihenfolge bezeichnet werden. So können beispielsweise für den Fall, dass eintausend eindeutige Identifizierungscodes vorgesehen sind, die Zahlen eins bis eintausend vorgesehen sein, wobei jeder der eindeutigen Identifizierungscodes eine dieser Zahlen aufweist und sich die Zahlen der eindeutigen Identifizierungscodes unterscheiden. Beispielsweise kann die Codereihenfolge durch eine ansteigende Zahlenfolge dieser Zahlen definiert sein, sodass beispielsweise der eindeutige Identifizierungscode mit der Zahl eins der erste eindeutige Identifizierungscode sein kann und der eindeutige Identifizierungscode mit der Zahl eintausend kann beispielsweise der letzte eindeutige Identifizierungscode sein. Beispielsweise kann die Codereihenfolge alternativ auch durch eine absteigende Zahlenfolge dieser Zahlen definiert sein, sodass beispielsweise der eindeutige Identifizierungscode mit der Zahl eins der letzte eindeutige Identifizierungscode sein kann und der eindeutige Identifizierungscode mit der Zahl eintausend beispielsweise der erste eindeutige Identifizierungscode sein kann. Beispielsweise können die eindeutigen Identifizierungscodes Buchstaben und Ziffern aufweisen, die für jeden eindeutigen Identifizierungscode eine Zeichenfolge definieren und die Zeichenfolgen der eindeutigen Identifizierungscodes die Codereihenfolge definieren. Für den Fall, dass die eindeutigen Identifizierungscodes Buchstaben und Ziffern aufweisen, die für jeden eindeutigen Identifizierungscode eine Zeichenfolge definieren und die Zeichenfolgen der eindeutigen Identifizierungscodes die Codereihenfolge definieren, kann die Codereihenfolge auch als alphanumerisch definierte Codereihenfolge bezeichnet werden.

Alternativ dazu, dass die eindeutigen Identifizierungscodes die Codereihenfolge derart bilden, dass die eindeutigen Identifizierungscodes durch ihren Inhalt selbst eine Reihenfolge vorgeben, die der Codereihenfolge entspricht, können die eindeutigen Identifizierungscodes die Codereihenfolge auch derart bilden, dass die eindeutigen Identifizierungscodes unabhängig von ihrem Inhalt selbst die Codereihenfolge bilden. Beispielsweise können die eindeutigen Identifizierungscodes die Codereihenfolge derart bilden, dass die eindeutigen Identifizierungscodes innerhalb der Codereihenfolge nicht numerisch oder alphanumerisch sortiert sind. Auch wenn die eindeutigen Identifizierungscodes die Codereihenfolge derart bilden, dass die eindeutigen Identifizierungscodes innerhalb der Codereihenfolge nicht numerisch oder alphanumerisch sortiert sind, können die Positionen der eindeutigen Identifizierungscodes innerhalb der Codereihenfolge in der Zentraleinheit gespeichert sein und so die Codereihenfolge vorgeben. Für einen Betrachter der eindeutigen Identifizierungscodes kann die Codereihenfolge zufällig oder willkürlich erscheinen, Informationen, die die Codereihenfolge definieren, können jedoch in der Zentraleinheit gespeichert sein und somit die Codereihenfolge vorgeben.

Wie bereits beschrieben, ist die Codereihenfolge vorgegeben. Insbesondere wird dadurch, dass die Codereihenfolge vorgegeben ist, gewährleistet, dass die Codereihenfolge bereits vor dem Anbringen der Anzahl von eindeutigen Identifizierungscodes an der Anzahl von Gegenständen festgelegt sein kann.

Insbesondere ist vorgesehen, dass die Codereihenfolge repräsentierende Informationen in einer Zentraleinheit gespeichert sind, insbesondere bereits vor dem Anbringen der Anzahl von eindeutigen Identifizierungscodes an der Anzahl von Gegenständen, sodass die Codereihenfolge insbesondere durch ihre Speicherung in der Zentraleinheit vorgegeben sein kann. Beispielsweise können die eindeutigen Identifizierungscodes der Menge von eindeutigen Identifizierungscodes zusammen mit Positionen der eindeutigen Identifizierungscodes innerhalb der Codereihenfolge in der Zentraleinheit gespeichert sein, wobei jedem eindeutigen Identifizierungscode eine bestimmte Position in der Codereihenfolge zugeordnet ist und auch diese Zuordnung in der Zentraleinheit gespeichert ist. Somit kann für jeden eindeutigen Identifizierungscode auf die entsprechende Position des eindeutigen Identifizierungscodes innerhalb der Codereihenfolge rückgeschlossen werden.

Das Verfahren weist den folgenden Schritt auf: Anbringen der Anzahl von eindeutigen Identifizierungscodes aus der Menge von eindeutigen Identifizierungscodes an der Anzahl von Gegenständen, sodass an jedem Gegenstand ein eindeutiger Identifizierungscode angebracht wird. Die eindeutigen Identifizierungscodes der Anzahl von eindeutigen Identifizierungscodes werden also an der Anzahl von Gegenständen angebracht, sodass nach dem Anbringen der eindeutigen Identifizierungscodes der Anzahl von eindeutigen Identifizierungscodes diese auch als angebrachte eindeutige Identifizierungscodes bezeichnet werden können. Da die eindeutigen Identifizierungscodes die Codereihenfolge bilden, kann jedem angebrachten eindeutigen Identifizierungscode eine Position innerhalb der Codereihenfolge zugeordnet sein. Beispielsweise können die angebrachten eindeutigen Identifizierungscodes einen ersten angebrachten eindeutigen Identifizierungscode aufweisen, der innerhalb der Codereihenfolge derart positioniert ist, dass er von den angebrachten eindeutigen Identifizierungscodes derjenige ist, der innerhalb der Codereihenfolge am nächsten an dem ersten eindeutigen Identifizierungscode positioniert ist oder sogar mit diesem übereinstimmt. Weiter können die angebrachten eindeutigen Identifizierungscodes beispielsweise einen letzten angebrachten eindeutigen Identifizierungscode aufweisen, der innerhalb der Codereihenfolge derart positioniert ist, dass er von den angebrachten eindeutigen Identifizierungscodes derjenige ist, der innerhalb der Codereihenfolge am nächsten an dem letzten eindeutigen Identifizierungscode positioniert ist oder sogar mit diesem übereinstimmt. Insbesondere beziehen sich der erste angebrachte eindeutige Identifizierungscode und der zweite angebrachte eindeutige Identifizierungscode auf deren Position innerhalb der Codereihenfolge und nicht zwingendermaßen auf die Reihenfolge in der die angebrachten eindeutigen Identifizierungscodes an den Gegenständen angebracht wurden. Beispielsweise können die eindeutigen Identifizierungscodes nämlich in einer der vorgegebenen Codereihenfolge entsprechenden Reihenfolge nacheinander an den Gegenständen angebracht werden. Dies ist beispielsweise dann vorteilhalft, wenn eine Anzahl von Etiketten aus einer Menge von Etiketten vorgesehen ist und jedes Etikett der Menge von Etiketten einen eindeutigen Identifizierungscode der Menge von eindeutigen Identifizierungscodes aufweist und die Etiketten Etiketten einer Etikettenrolle sind und entsprechend der Codereihenfolge angeordnet sind, sodass die Etiketten entsprechend der Codereihenfolge nacheinander der Etikettenrolle entnommen werden können und in der Codereihenfolge an den Gegenständen angebracht werden können. Alternativ ist es jedoch auch beispielsweise möglich, dass die eindeutigen Identifizierungscodes in einer nicht der vorgegebenen Codereihenfolge entsprechenden Reihenfolge nacheinander an den Gegenständen angebracht werden. Für den Fall, dass die eindeutigen Identifizierungscodes in einer der vorgegebenen Codereihenfolge entsprechenden Reihenfolge nacheinander an den Gegenständen angebracht werden, ist der erste angebrachte eindeutige Identifizierungscode der tatsächlich als erstes angebrachte eindeutige Identifizierungscode und ist der letzte angebrachte eindeutige Identifizierungscode der tatsächlich als letztes angebrachte eindeutige Identifizierungscode. Für den Fall, dass die eindeutigen Identifizierungscodes in einer nicht der vorgegebenen Codereihenfolge entsprechenden Reihenfolge nacheinander an den Gegenständen angebracht werden, ist der erste angebrachte eindeutige Identifizierungscode nicht zwingendermaßen der tatsächlich als erstes angebrachte eindeutige Identifizierungscode und ist der letzte angebrachte eindeutige Identifizierungscode nicht zwingendermaßen der tatsächlich als letztes angebrachte eindeutige Identifizierungscode.

Bevorzugt bilden die eindeutigen Identifizierungscodes der Anzahl von eindeutigen Identifizierungscodes innerhalb der Codereihenfolge aneinander angrenzende eindeutige Identifizierungscodes. Für den Fall, dass die eindeutigen Identifizierungscodes der Anzahl von eindeutigen Identifizierungscodes innerhalb der Codereihenfolge aneinander angrenzende eindeutige Identifizierungscodes bilden, kann anhand der Position des ersten angebrachten eindeutigen Identifizierungscodes und der Position des letzten angebrachten eindeutigen Identifizierungscodes auf einfache Weise auf die Gesamtzahl der angebrachten eindeutigen Identifizierungscodes rückgeschlossen werden.

Dadurch, dass jeder eindeutige Identifizierungscode eindeutig ist und sich die eindeutigen Identifizierungscodes voneinander unterscheiden, kann anhand jedes angebrachten eindeutigen Identifizierungscodes auf die Identität des Gegenstands rückgeschlossen werden, an dem der entsprechende eindeutige Identifizierungscode angebracht ist. Insbesondere kann dadurch, dass jeder eindeutige Identifizierungscode eindeutig ist und sich die eindeutigen Identifizierungscodes voneinander unterscheiden, anhand jedes angebrachten eindeutigen Identifizierungscodes jeder Gegenstand, an dem der entsprechende eindeutige Identifizierungscode angebracht ist, von anderen Gegenständen, die gegebenenfalls identisch oder ähnlich aussehen, unterschieden werden.

Wie bereits beschrieben wird die Anzahl von eindeutigen Identifizierungscodes aus der Menge von eindeutigen Identifizierungscodes an der Anzahl von Gegenständen so angebracht, dass an jedem Gegenstand ein eindeutiger Identifizierungscode angebracht wird. Bevorzugt ist eine Menge von Sicherheitsfeldern mit einer Anzahl von Sicherheitsfeldern vorgesehen, wobei die Anzahl von Sicherheitsfeldern an der Anzahl von Gegenständen so angebracht wird, dass an jedem Gegenstand ein Sicherheitsfeld angebracht wird. Somit kann an jedem Gegenstand sowohl ein eindeutiger Identifizierungscode als auch ein Sicherheitsfeld angebracht sein. Bevorzugt sind an jedem Gegenstand der eindeutige Identifizierungscode und das Sicherheitsfeld derart angeordnet, dass der eindeutige Identifizierungscode und das Sicherheitsfeld gemeinsam, vorzugsweise gleichzeitig, von der Erfassungseinheit optisch erfasst werden können.

Jedes Sicherheitsfeld der Menge von Sicherheitsfeldern weist bevorzugt ein Informationsfeld mit einer Struktur auf, mit der ein erster Sicherheitscode kodiert ist, wobei der erste Sicherheitscode aus der Struktur nur dekodiert werden kann, wenn diese mit einer Mindestauflösung hergestellt ist. Insbesondere ist die Struktur eine zweidimensionale Darstellung, die so angeordnet ist, dass dann, wenn das Sicherheitsfeld optisch erfasst wird, die zweidimensionale Darstellung ebenfalls optisch erfasst wird. Die zweidimensionale Darstellung der Struktur kann ein Fourier-Muster aufweisen oder aus diesem gebildet sein. Insbesondere ist vorgesehen, dass die Struktur selbst kein QR-Code, DataMatrix, Cool-Data-Matrix, Aztec, UPCode, Trillcode, Quickmark, Shotcode, mCode, oder Beetagg ist. Die Struktur kann vielmehr in bestimmten Ausführungsbeispielen einen Abschnitt eines QR-Codes, DataMatrix, Cool-Data-Matrix, Aztecs, UPCodes, Trillcodes, Quickmarks, Shotcodes, mCodes, oder Beetaggs bilden. Die Struktur kann auch als Sicherheitsstruktur bezeichnet werden. Mit der Struktur ist bevorzugt ein erster Sicherheitscode kodiert. Durch Erfassen der Struktur und Dekodieren der erfassten Struktur kann somit der erste Sicherheitscode ermittelt werden. Der erste Sicherheitscode eines bestimmten Sicherheitsfelds unterscheidet sich bevorzugt von den ersten Sicherheitscodes anderer Sicherheitsfelder. Der erste Sicherheitscode unterscheidet sich somit insbesondere von anderen ersten Sicherheitscodes. Insbesondere unterscheiden sich die ersten Sicherheitscodes voneinander. Insbesondere ist vorgesehen, dass keine zwei Strukturen existieren, mit denen jeweils ein erster Sicherheitscode kodiert ist, wobei die beiden ersten Sicherheitscodes identisch sind. Dadurch, dass sich der erste Sicherheitscode von anderen ersten Sicherheitscodes unterscheidet ist der erste Sicherheitscode eindeutig. Aufgrund der Eindeutigkeit des ersten Sicherheitscodes kann anhand des ersten Sicherheitscodes auf die Identität jedes Gegenstands rückgeschlossen werden. Insbesondere kann dadurch, dass der erste Sicherheitscode eindeutig ist, anhand des ersten Sicherheitscodes der Gegenstand, an dem der erste Sicherheitscode angebracht ist, von anderen Gegenständen, die gegebenenfalls identisch oder ähnlich aussehen, unterschieden werden. Der erste Sicherheitscode ist mit der Struktur kodiert und liegt somit in kodierter Form vor, wobei die Struktur diese kodierte Form darstellt. Dadurch, dass der erste Sicherheitscode kodiert ist, kann ein Betrachter der Struktur nicht zwangsläufig ohne technische Hilfsmittel, wie beispielsweise der Erfassungseinheit und/oder einer Auswerteeinheit, auf den ersten Sicherheitscode rückschließen. Insbesondere ist es vorteilhaft, wenn die Struktur so ausgebildet ist, dass ein Betrachter der Struktur nicht ohne technische Hilfsmittel auf den ersten Sicherheitscode rückschließen kann. Wenn der Betrachter nicht, insbesondere nicht zwangsläufig, ohne technische Hilfsmittel auf den ersten Sicherheitscode rückschließen kann, wird gewährleistet, dass eine Vervielfältigung des ersten Sicherheitscodes an dem Gegenstand wesentlich erschwert oder sogar verhindert wird.

Der erste Sicherheitscode kann aus der Struktur nur dekodiert werden, wenn diese mit einer Mindestauflösung hergestellt ist. Das Herstellen der Struktur kann auch als Erzeugen der Struktur bezeichnet werden. Insbesondere ist die Struktur so fein, dass, insbesondere zu deren Herstellung, eine Mindestauflösung notwendig ist, damit die Struktur so dargestellt werden kann, dass der erste Sicherheitscode aus der Struktur dekodiert werden kann. Die Struktur kann als Fourier-Muster ausgebildet sein. Die Mindestauflösung, mit der die Struktur hergestellt ist, ist bevorzugt 300 dpi. Insbesondere hat es sich als vorteilhaft erwiesen, wenn die Mindestauflösung größer als 300 dpi ist. Noch vorteilhafter ist es, wenn die Mindestauflösung, mit der die Struktur hergestellt ist, 600 dpi ist. Noch vorteilhafter ist es, wenn die Mindestauflösung, mit der die Struktur hergestellt ist, größer als 600 dpi ist. Noch vorteilhafter ist es, wenn die Mindestauflösung, mit der die Struktur hergestellt ist 800 dpi ist. Noch vorteilhafter ist es, wenn die Mindestauflösung, mit der die Struktur hergestellt ist, größer als 800 dpi ist. Mit zunehmender Mindestauflösung, mit der die Struktur hergestellt ist, erhöht sich der Schutz der Struktur vor einer Vervielfältigung der Struktur, da mit zunehmender Mindestauflösung insbesondere die Herstellung der Struktur erschwert wird, sodass diese nach der Herstellung so ausgebildet ist, dass der erste Sicherheitscode aus der Struktur dekodiert werden kann. Weiter wird insbesondere bei einem Kopierversuch der Struktur, diese derart verändert oder besser gesagt bei dem Versuch der Reproduktion derart verfälscht, dass, insbesondere nach einer erneuten Herstellung, ein erneutes Dekodieren nicht mehr möglich ist. Insbesondere für den Fall, dass die Struktur als Fourier-Muster ausgebildet ist, gewährleistet eine hohe Mindestauflösung einen Kopierschutz, und zwar derart, dass die Struktur, nachdem sie optisch erfasst wurde, wie beispielsweise durch Scannen oder abfotografieren, und gegebenenfalls nach einem Reproduzieren der Struktur durch beispielsweise Ausdrucken der Struktur mit einem Standarddrucker, nicht mehr lesbar in dem Sinne ist, dass der erste Sicherheitscode nicht aus der reproduzierten Struktur dekodiert werden kann. Dann kann darauf rückgeschlossen werden, dass die reproduzierte Struktur eine Kopie der Struktur ist, und somit ebenfalls darauf rückgeschlossen werden, dass beispielsweise das Sicherheitsfeld und womöglich der Gegenstand, an dem das Sicherheitsfeld angebracht ist, eine unerlaubte Kopie eines Sicherheitsfelds mit der Struktur ist, die für den Kopiervorgang optisch erfasst wurde. Zusammenfassend kann festgestellt werden, dass dadurch, dass der erste Sicherheitscode aus der Struktur nur dann dekodiert werden kann, wenn diese mit einer Mindestauflösung hergestellt ist, ein Kopierschutz für das Sicherheitsfeld bereitgestellt werden kann. Insbesondere kann dadurch, dass der erste Sicherheitscode aus der Struktur nur dann dekodiert werden kann, wenn diese mit einer Mindestauflösung hergestellt ist, gewährleistet werden, dass auf eine reproduzierte Struktur aus einer Original-Struktur rückgeschlossen werden kann.

Weiter ist bevorzugt, dass jedes Sicherheitsfeld der Menge von Sicherheitsfeldern ein Hologramm mit einem zweiten Sicherheitscode aufweist. Jedes Sicherheitsfeld der Menge von Sicherheitsfeldern kann - zusätzlich oder alternativ dazu, dass jedes Sicherheitsfeld der Menge von Sicherheitsfeldern das Informationsfeld mit der Struktur aufweist - das Hologramm mit dem zweiten Sicherheitscode aufweisen. Der zweite Sicherheitscode eines bestimmten Sicherheitsfelds unterscheidet sich bevorzugt von den zweiten Sicherheitscodes anderer Sicherheitsfelder. Der zweite Sicherheitscode unterscheidet sich somit insbesondere von anderen zweiten Sicherheitscodes. Insbesondere unterscheiden sich die zweiten Sicherheitscodes voneinander. Insbesondere ist vorgesehen, dass keine zwei Hologramme mit jeweils einem zweiten Sicherheitscode existieren, wobei die beiden zweiten Sicherheitscodes identisch sind. Dadurch, dass sich der zweite Sicherheitscode von anderen zweiten Sicherheitscodes unterscheidet ist der zweite Sicherheitscode eindeutig. Aufgrund der Eindeutigkeit des zweiten Sicherheitscodes kann anhand des zweiten Sicherheitscodes auf die Identität jedes Gegenstands rückgeschlossen werden. Insbesondere kann dadurch, dass der zweite Sicherheitscode eindeutig ist, anhand des zweiten Sicherheitscodes der Gegenstand, an dem der zweite Sicherheitscode angebracht ist, von anderen Gegenständen, die gegebenenfalls identisch oder ähnlich aussehen, unterschieden werden. Wie bereits beschrieben unterscheiden sich die eindeutigen Identifizierungscodes voneinander. Weiter, wie ebenfalls bereits beschrieben, ist für den Fall, dass erste Sicherheitscodes vorgesehen sind, bevorzugt, dass sich die ersten Sicherheitscodes voneinander unterscheiden. Außerdem ist, wie ebenfalls bereits beschrieben, für den Fall, dass zweite Sicherheitscodes vorgesehen sind, bevorzugt, dass sich die zweiten Sicherheitscodes voneinander unterscheiden. Für den Fall, dass erste Sicherheitscodes vorgesehen sind, ist bevorzugt vorgesehen, dass für jeden Gegenstand der Anzahl von Gegenständen gilt, dass der an einem bestimmten Gegenstand angebrachte eindeutige Identifizierungscode dem an diesem Gegenstand - mithilfe der Struktur - angebrachten ersten Sicherheitscode entspricht, d.h., dass der an dem Gegenstand angebrachte eindeutige Identifizierungscode und der an diesem Gegenstand angebrachte erste Sicherheitscode denselben Code (beispielsweise "0001") repräsentieren. Weiter ist für den Fall, dass zweite Sicherheitscodes vorgesehen sind, bevorzugt vorgesehen, dass für jeden Gegenstand der Anzahl von Gegenständen gilt, dass der an einem bestimmten Gegenstand angebrachte eindeutige Identifizierungscode dem an diesem Gegenstand - mithilfe des Hologramms - angebrachten zweiten Sicherheitscode entspricht, d.h., dass der an dem Gegenstand angebrachte eindeutige Identifizierungscode und der an diesem Gegenstand angebrachte zweite Sicherheitscode denselben Code (beispielsweise "0001") repräsentieren.

Beispielsweise können zusätzlich zu den eindeutigen Identifizierungscodes die ersten Sicherheitscodes und/oder die zweiten Sicherheitscodes in der Zentraleinheit gespeichert sein. Insbesondere kann jedem eindeutigen Identifizierungscode ein erster Sicherheitscode und/oder ein zweiter Sicherheitscode zugeordnet sein und die Entsprechende Zuordnung ebenfalls in der Zentraleinheit gespeichert sein. Somit kann für jeden eindeutigen Identifizierungscode ein an demselben Gegenstand angebrachter erster Sicherheitscode und/oder zweiter Sicherheitscode, insbesondere optisch, erfasst werden, insbesondere mithilfe der Erfassungseinheit, und an die Zentraleinheit übermittelt werden. In der Zentraleinheit kann dann anhand der in der Zentraleinheit gespeicherten Zuordnung von eindeutigen Identifizierungscodes und ersten Sicherheitscodes und/oder zweiten Sicherheitscodes, insbesondere für jeden eindeutigen Identifizierungscode, darauf rückgeschlossen werden, ob der erfasste erste Sicherheitscode und/oder der erfasste zweite Sicherheitscode dem einem bestimmten eindeutigen Identifizierungscode zugeordneten ersten Sicherheitscodes und/oder zweiten Sicherheitscode entspricht und, wenn dies der Fall ist, darauf rückgeschlossen werden, dass der eindeutige Identifizierungscode ein nicht unberechtigt kopierter eindeutiger Identifizierungscode ist. Mithilfe des ersten Sicherheitscodes und/oder des zweiten Sicherheitscodes kann somit ein Kopierschutz für den eindeutigen Identifizierungscode bereitgestellt werden. Insbesondere kann mithilfe der ersten Sicherheitscodes und/oder der zweiten Sicherheitscodes ein Kopierschutz für die eindeutigen Identifizierungscodes bereitgestellt werden.

Weiter weist das Verfahren den folgenden Schritt auf: Optisches Erfassen eines eindeutigen Identifizierungscodes aus der Menge von eindeutigen Identifizierungscodes mithilfe einer Erfassungseinheit und Erfassen einer Zusatzinformation. Dadurch, dass der eindeutige Identifizierungscode aus der Menge von eindeutigen Identifizierungscodes mithilfe einer Erfassungseinheit optisch erfasst wird, kann der optisch erfasste eindeutige Identifizierungscode zur weiteren Analyse herangezogen werden. Insbesondere ist vorgesehen, dass das optische Erfassen ein Scannen oder Fotografieren umfasst. Bevorzugt ist die Erfassungseinheit eine Erfassungseinheit eines Mobiltelefons, wie beispielsweise eine Kamera, insbesondere eine Digitalkamera, des Mobiltelefons sein. Dadurch, dass die Zusatzinformation erfasst wird, kann die erfasste Zusatzinformation zusammen mit dem optisch erfassten eindeutigen Identifizierungscode zur weiteren Analyse herangezogen werden. Bevorzugt umfasst das Erfassen der Zusatzinformation ein optisches Erfassen mithilfe der Erfassungseinheit, sodass sowohl der eindeutige Identifizierungscode als auch die Zusatzinformation mithilfe der Erfassungseinheit, bevorzugt gemeinsam, besonders bevorzugt gleichzeitig, optisch erfasst werden. Durch eine gemeinsame, bevorzugt gleichzeitige, optische Erfassung kann ein besonders einfaches und zeiteffizientes Verfahren bereitgestellt werden, wobei die gleichzeitige optische Erfassung eine besonders zeiteffiziente Variante des Verfahrens bereitstellt. Alternativ dazu, dass das Erfassen der Zusatzinformation ein optisches Erfassen mithilfe der Erfassungseinheit umfasst, kann das Erfassen der Zusatzinformation auch ein manuelles Erfassen aufweisen. Beispielsweise kann ein Benutzer des Mobiltelefons manuell die Zusatzinformation beispielsweise über eine Benutzerschnittstelle des Mobiltelefons eingeben.

Bevorzugt umfasst die Zusatzinformation einen weiteren eindeutigen Identifizierungscode aus der Menge von eindeutigen Identifizierungscodes. Alternativ oder zusätzlich kann die Zusatzinformation auch die relative Position in der vorgegebenen Codereihenfolge des optisch erfassten eindeutigen Identifizierungscodes zu dem ersten angebrachten eindeutigen Identifizierungscode und/oder zu dem letzten angebrachten eindeutigen Identifizierungscode umfassen. Ebenso kann alternativ oder zusätzlich vorgesehen sein, dass die Zusatzinformation die relative Position in der vorgegebenen Codereihenfolge des weiteren eindeutigen Identifizierungscode aus der Menge von eindeutigen Identifizierungscodes zu dem ersten angebrachten eindeutigen Identifizierungscode und/oder zu dem letzten angebrachten eindeutigen Identifizierungscode umfassen. In jedem dieser Kombinationen ist die erfasste Zusatzinformation zusammen mit dem optisch erfassten eindeutigen Identifizierungscode dazu geeignet auf die angebrachten eindeutigen Identifizierungscodes rückzuschließen. Beispielsweise kann für den Fall, dass die Zusatzinformation den weiteren eindeutigen Identifizierungscode aus der Menge von eindeutigen Identifizierungscodes aufweist vorgegeben sein, dass bei dem optischen Erfassen des eindeutigen Identifizierungscodes der erste angebrachte eindeutige Identifizierungscode optisch erfasst wird und bei dem Erfassen der Zusatzinformation der letzte angebrachte eindeutige Identifizierungscode erfasst wird, sodass der erste angebrachte eindeutige Identifizierungscode dem optisch erfassten eindeutigen Identifizierungscode entspricht und der letzte angebrachte eindeutige Identifizierungscode dem erfassten weitere eindeutige Identifizierungscode entspricht. In jedem Fall kann die erfasste Zusatzinformation zusammen mit dem optisch erfassten eindeutigen Identifizierungscode den Rückschluss auf die angebrachten eindeutigen Identifizierungscodes gewährleisten.

Weiter weist das Verfahren den folgenden Schritt auf: Rückschließen auf die angebrachten eindeutigen Identifizierungscodes anhand des optisch erfassten eindeutigen Identifizierungscodes und der erfassten Zusatzinformation. Insbesondere dadurch, dass die eindeutigen Identifizierungscodes die vorgegebene Codereihenfolge bilden, kann anhand des optisch erfassten eindeutigen Identifizierungscodes und der erfassten Zusatzinformation auf die angebrachten eindeutigen Identifizierungscodes rückgeschlossen werden. Durch das Rückschließen auf die angebrachten eindeutigen Identifizierungscodes anhand des optisch erfassten eindeutigen Identifizierungscodes und der erfassten Zusatzinformation wird ein Rückschließen auf die angebrachten eindeutigen Identifizierungscodes insbesondere im Vergleich zu einem optischen Erfassen jedes einzelnen angebrachten eindeutigen Identifizierungscodes deutlich vereinfacht und beschleunigt. Das Rückschließen auf die angebrachten eindeutigen Identifizierungscodes anhand des optisch erfassten eindeutigen Identifizierungscodes und der erfassten Zusatzinformation kann beispielsweise dadurch gewährleistet werden, dass anhand des optisch erfassten eindeutigen Identifizierungscodes und anhand der erfassten Zusatzinformation die Position des ersten angebrachten eindeutigen Identifizierungscode innerhalb der Codereihenfolge sowie die Anzahl der angebrachten eindeutigen Identifizierungscodes bestimmt werden und anhand dieser Information auf die Positionen der angebrachten eindeutigen Identifizierungscodes innerhalb der Codereihenfolge und auf die angebrachten eindeutigen Identifizierungscodes selbst rückgeschlossen wird. Weiter kann das Rückschließen auf die angebrachten eindeutigen Identifizierungscodes anhand des optisch erfassten eindeutigen Identifizierungscodes und der erfassten Zusatzinformation beispielsweise dadurch gewährleistet werden, dass anhand des optisch erfassten eindeutigen Identifizierungscodes und anhand der erfassten Zusatzinformation die Position des letzten angebrachten eindeutigen Identifizierungscode innerhalb der Codereihenfolge sowie die Anzahl der angebrachten eindeutigen Identifizierungscodes bestimmt werden und anhand dieser Information auf die Positionen der angebrachten eindeutigen Identifizierungscodes innerhalb der Codereihenfolge und auf die angebrachten eindeutigen Identifizierungscodes selbst rückgeschlossen wird. Außerdem kann das Rückschließen auf die angebrachten eindeutigen Identifizierungscodes anhand des optisch erfassten eindeutigen Identifizierungscodes und der erfassten Zusatzinformation beispielsweise dadurch gewährleistet werden, dass anhand des optisch erfassten eindeutigen Identifizierungscodes und anhand der erfassten Zusatzinformation die Position des ersten angebrachten eindeutigen Identifizierungscode innerhalb der Codereihenfolge sowie die Position des letzten angebrachten eindeutigen Identifizierungscode innerhalb der Codereihenfolge bestimmt wird und anhand dieser Information auf die Positionen der angebrachten eindeutigen Identifizierungscodes innerhalb der Codereihenfolge und auf die angebrachten eindeutigen Identifizierungscodes selbst rückgeschlossen wird.

Zusammenfassend kann also festgestellt werden, dass die vorliegende Erfindung eine einfache und schnelle Bestimmung bereitstellt, welche eindeutigen Identifizierungscodes an den Gegenständen angebracht sind.

In einer Ausführungsform umfasst das Erfassen der Zusatzinformation ein optisches Erfassen eines weiteren eindeutigen Identifizierungscodes aus der Menge von eindeutigen Identifizierungscodes. Beispielsweise kann für den Fall, dass die Zusatzinformation den weiteren eindeutigen Identifizierungscode aus der Menge von eindeutigen Identifizierungscodes aufweist vorgegeben sein, dass bei dem optischen Erfassen des eindeutigen Identifizierungscodes der erste angebrachte eindeutige Identifizierungscode optisch erfasst wird und bei dem Erfassen der Zusatzinformation der letzte angebrachte eindeutige Identifizierungscode erfasst wird, sodass der erste angebrachte eindeutige Identifizierungscode dem optisch erfassten eindeutigen Identifizierungscode entspricht und der letzte angebrachte eindeutige Identifizierungscode dem erfassten weiteren eindeutigen Identifizierungscode entspricht. Hierdurch wird eine besonders einfache und besonders schnelle Bestimmung dahingehend bereitgestellt, welche eindeutigen Identifizierungscodes an den Gegenständen angebracht sind, da insbesondere auf die innerhalb der Codereihenfolge zwischen dem ersten angebrachten eindeutigen Identifizierungscode und dem letzten angebrachten eindeutigen Identifizierungscode angeordneten eindeutigen Identifizierungscodes bei dem Rückschluss auf die angebrachten eindeutigen Identifizierungscodes zurückgegriffen werden kann. Dies ist insbesondere dann bevorzugt, wenn die eindeutigen Identifizierungscodes der Anzahl von eindeutigen Identifizierungscodes innerhalb der Codereihenfolge aneinander angrenzende eindeutige Identifizierungscodes bilden.

In einer Ausführungsform umfasst das Erfassen der Zusatzinformation ein Erfassen der relativen Position in der vorgegebenen Codereihenfolge des optisch erfassten eindeutigen Identifizierungscodes zu dem ersten angebrachten eindeutigen Identifizierungscode und zu dem letzten angebrachten eindeutigen Identifizierungscode. Für den Fall, dass das Erfassen der Zusatzinformation ein Erfassen der relativen Position in der vorgegebenen Codereihenfolge des optisch erfassten eindeutigen Identifizierungscodes zu dem ersten angebrachten eindeutigen Identifizierungscode und zu dem letzten angebrachten eindeutigen Identifizierungscode umfasst, kann mithilfe eines einzigen optisch erfassten eindeutigen Identifizierungscodes auf die angebrachten eindeutigen Identifizierungscodes rückgeschlossen werden, ohne, dass über den eindeutigen Identifizierungscode hinaus weitere eindeutige Identifizierungscodes optisch erfasst werden müssen. Bevorzugt ist die Zusatzinformation an demselben Gegenstand angebracht, an dem auch der eindeutige Identifizierungscode, der optisch erfasst wird, angebracht ist, sodass die Zusatzinformation und der eindeutige Identifizierungscode gemeinsam, vorzugsweise gleichzeitig, von der Erfassungseinheit optisch erfasst werden können. Ein gemeinsames, vorzugsweise gleichzeitiges, Erfassen der Zusatzinformation und des eindeutigen Identifizierungscodes stellt ein besonders zeiteffizientes Verfahren bereit, da die Zusatzinformation und der eindeutige Identifizierungscode in einer kurzen Zeitspanne erfasst werden können, insbesondere im Vergleich zu dem Fall, dass mehr als ein eindeutiger Identifizierungscode erfasst werden muss. Somit kann mit besonders geringem Zeitaufwand auf die angebrachten eindeutigen Identifizierungscodes anhand des optisch erfassten eindeutigen Identifizierungscodes und der erfassten Zusatzinformation rückgeschlossen werden. Insbesondere kann mithilfe der relativen Positionen unabhängig davon, ob der optisch erfasste eindeutige Identifizierungscode Teil der angebrachten eindeutigen Identifizierungscodes ist auf die angebrachten eindeutigen Identifizierungscodes rückgeschlossen werden.

In einer Ausführungsform umfasst das Erfassen der Zusatzinformation ein Erfassen der relativen Position in der vorgegebenen Codereihenfolge des optisch erfassten eindeutigen Identifizierungscodes zu dem ersten angebrachten eindeutigen Identifizierungscode und ein Erfassen der relativen Position in der vorgegebenen Codereihenfolge des optisch erfassten weiteren eindeutigen Identifizierungscodes zu dem letzten angebrachten eindeutigen Identifizierungscode. Beispielsweise kann die relative Position in der vorgegebenen Codereihenfolge des optisch erfassten eindeutigen Identifizierungscodes zu dem ersten angebrachten eindeutigen Identifizierungscode angeben, dass der erste angebrachte eindeutige Identifizierungscode dem optisch erfassten eindeutigen Identifizierungscode entspricht. Alternativ kann die relative Position in der vorgegebenen Codereihenfolge des optisch erfassten eindeutigen Identifizierungscodes zu dem ersten angebrachten eindeutigen Identifizierungscode angeben, dass der erste angebrachte eindeutige Identifizierungscode in einer bestimmten Anzahl an Positionen innerhalb der Codereihenfolge vor oder nach dem optisch erfassten eindeutigen Identifizierungscodes angeordnet ist. Weiter kann beispielsweise die relative Position in der vorgegebenen Codereihenfolge des optisch erfassten weiteren eindeutigen Identifizierungscodes zu dem letzten angebrachten eindeutigen Identifizierungscode angeben, dass der letzte angebrachte eindeutige Identifizierungscode dem optisch erfassten weiteren eindeutigen Identifizierungscode entspricht. Alternativ kann die relative Position in der vorgegebenen Codereihenfolge des optisch erfassten weiteren eindeutigen Identifizierungscodes zu dem letzten angebrachten eindeutigen Identifizierungscode angeben, dass der letzte angebrachte eindeutige Identifizierungscode in einer bestimmten Anzahl an Positionen innerhalb der Codereihenfolge vor oder nach dem optisch erfassten weiteren eindeutigen Identifizierungscodes angeordnet ist. Durch das Erfassen der relativen Position in der vorgegebenen Codereihenfolge des optisch erfassten eindeutigen Identifizierungscodes zu dem ersten angebrachten eindeutigen Identifizierungscode und ein Erfassen der relativen Position in der vorgegebenen Codereihenfolge des optisch erfassten weiteren eindeutigen Identifizierungscodes zu dem letzten angebrachten eindeutigen Identifizierungscode kann über die Zuordnung der eindeutigen Identifizierungscodes zu dessen Positionen innerhalb der Codereihenfolge auf die angebrachten eindeutigen Identifizierungscodes rückgeschlossen werden. Mithilfe der relativen Positionen kann unabhängig davon, ob der optisch erfasste eindeutige Identifizierungscode und der optisch erfasste weitere eindeutige Identifizierungscode Teil der angebrachten eindeutigen Identifizierungscodes auf die angebrachten eindeutigen Identifizierungscodes rückgeschlossen werden.

In einer Ausführungsform ist eine Anzahl von Etiketten aus einer Menge von Etiketten vorgesehen, wobei jedes Etikett der Menge von Etiketten einen eindeutigen Identifizierungscode der Menge von eindeutigen Identifizierungscodes aufweist, wobei die Menge von Etiketten eine vorgegebene Etikettenreihenfolge bildet, wobei die Etikettenreihenfolge der Codereihenfolge entspricht, sodass in der Etikettenreihenfolge ein erstes Etikett mit dem ersten eindeutigen Identifizierungscode und ein letztes Etikett mit dem letzten eindeutigen Identifizierungscode vorgesehen sind, wobei das Anbringen der Anzahl von eindeutigen Identifizierungscodes aus der Menge von eindeutigen Identifizierungscodes an der Anzahl von Gegenständen ein Anbringen der Anzahl von Etiketten aus der Menge von Etiketten an der Anzahl von Gegenständen umfasst, sodass an jedem Gegenstand ein Etikett angebracht wird, wobei das optische Erfassen des eindeutigen Identifizierungscodes aus der Menge von eindeutigen Identifizierungscodes ein optisches Erfassen eines Etiketts aus der Menge von Etiketten mithilfe der Erfassungseinheit umfasst, sodass der eindeutige Identifizierungscode des optisch erfassten Etiketts erfasst wird. Dadurch, dass jedes Etikett der Menge von Etiketten einen eindeutigen Identifizierungscode der Menge von eindeutigen Identifizierungscodes aufweist, können die eindeutigen Identifizierungscodes mithilfe der Etiketten an die Gegenstände angebracht werden. Für den Fall, dass beim Anbringen der Etiketten an die Gegenstände ein Etikett der Anzahl von Etiketten beschädigt wird kann vorgesehen sein, dass das beschädigte Etikett durch ein anderes Etikett der Anzahl von Etiketten ersetzt wird und anstelle des beschädigten Etikett oder zusätzlich zu dem beschädigten Etikett an dem Gegenstand angebracht wird. Weiter kann für diesen Fall vorgesehen sein, dass beispielsweise mithilfe der Erfassungseinheit der eindeutige Identifizierungscode des beschädigten Etiketts als defekter Identifizierungscode erfasst wird und der defekte Identifizierungscode bei dem Rückschließen auf die angebrachten eindeutigen Identifizierungscodes berücksichtigt wird. Weiter kann für den Fall, dass beim Anbringen der Etiketten an die Gegenstände mehrere Etiketten der Anzahl von Etiketten beschädigt werden, kann vorgesehen sein, dass jedes der beschädigten Etiketten durch ein anderes Etikett der Anzahl von Etiketten ersetzt wird und anstelle jedes beschädigten Etiketts oder zusätzlich zu jedem beschädigten Etikett an dem entsprechenden Gegenstand angebracht wird. Weiter kann für diesen Fall vorgesehen sein, dass beispielsweise mithilfe der Erfassungseinheit die eindeutigen Identifizierungscodes der beschädigten Etiketten als defekte Identifizierungscodes erfasst werden und die defekten Identifizierungscodes bei dem Rückschließen auf die angebrachten eindeutigen Identifizierungscodes berücksichtigt werden. Beispielsweise kann auch vorgesehen sein, dass mithilfe der Erfassungseinheit die Anzahl der defekten Identifizierungscodes erfasst wird und diese Anzahl bei dem Rückschließen auf die angebrachten eindeutigen Identifizierungscodes berücksichtigt wird.

In einer Ausführungsform weist das Verfahren außerdem den folgenden Schritt auf: Speichern des optisch erfassten eindeutigen Identifizierungscodes und der Zusatzinformation in der Erfassungseinheit. Das Speichern des optisch erfassten eindeutigen Identifizierungscodes und der Zusatzinformation in der Erfassungseinheit gewährleistet einen Betrieb der Erfassungseinheit selbst dann, wenn diese in einem Offlinezustand ist, in dem die Erfassungseinheit über keine Kommunikationsschnittstelle Daten, die den optisch erfassten eindeutigen Identifizierungscode und die Zusatzinformation repräsentieren, an die Zentraleinheit senden kann.

In einer Ausführungsform weist das Verfahren außerdem den folgenden Schritt auf: Übermitteln des optisch erfassten eindeutigen Identifizierungscodes und der Zusatzinformation an eine Zentraleinheit. Das Übermitteln des optisch erfassten eindeutigen Identifizierungscodes und der Zusatzinformation an eine Zentraleinheit hat den Vorteil, dass der übermittelte optisch erfasste eindeutige Identifizierungscode und die übermittelte Zusatzinformation in der Zentraleinheit für weitere Auswertungen genutzt werden kann, wie beispielsweise das Rückschließen auf die angebrachten eindeutigen Identifizierungscodes anhand des optisch erfassten eindeutigen Identifizierungscodes und der erfassten Zusatzinformation. Das Übermitteln des optisch erfassten eindeutigen Identifizierungscodes und der Zusatzinformation an die Zentraleinheit kann durch Senden von Daten, die den optisch erfassten eindeutigen Identifizierungscode und die Zusatzinformation repräsentieren, über eine Kommunikationsschnittstelle an die Zentraleinheit bereitgestellt werden. Insbesondere kann das Übermitteln hierbei zumindest abschnittsweise drahtlos oder drahtgebunden erfolgen. Insbesondere ist vorgesehen, dass das Rückschließen auf die angebrachten eindeutigen Identifizierungscodes anhand des optisch erfassten eindeutigen Identifizierungscodes und der erfassten Zusatzinformation nach dem Übermitteln des optisch erfassten eindeutigen Identifizierungscodes und der Zusatzinformation an die Zentraleinheit erfolgt. Bevorzugt erfolgt in diesem Fall das Rückschließen auf die angebrachten eindeutigen Identifizierungscodes in der Zentraleinheit. Hierbei können beispielsweise die eindeutigen Identifizierungscodes der Menge von eindeutigen Identifizierungscodes zusammen mit Positionen der eindeutigen Identifizierungscodes innerhalb der Codereihenfolge in der Zentraleinheit gespeichert sein, wobei jedem eindeutigen Identifizierungscode eine bestimmte Position in der Codereihenfolge zugeordnet ist und auch diese Zuordnung in der Zentraleinheit gespeichert ist. Weiter kann vorgesehen sein, dass das Rückschließen auf die angebrachten eindeutigen Identifizierungscodes anhand des optisch erfassten eindeutigen Identifizierungscodes und der erfassten Zusatzinformation vor dem Übermitteln des optisch erfassten eindeutigen Identifizierungscodes und der Zusatzinformation an die Zentraleinheit erfolgt. Bevorzugt erfolgt in diesem Fall das Rückschließen auf die angebrachten eindeutigen Identifizierungscodes in der Erfassungseinheit. Hierbei können beispielsweise die eindeutigen Identifizierungscodes der Menge von eindeutigen Identifizierungscodes zusammen mit Positionen der eindeutigen Identifizierungscodes innerhalb der Codereihenfolge in der Erfassungseinheit gespeichert sein, wobei jedem eindeutigen Identifizierungscode eine bestimmte Position in der Codereihenfolge zugeordnet ist und auch diese Zuordnung in der Erfassungseinheit gespeichert ist. Beispielsweise können die eindeutigen Identifizierungscodes, die Positionen der eindeutigen Identifizierungscodes innerhalb der Codereihenfolge und die Zuordnung der Positionen innerhalb der Codereihenfolge zu den eindeutigen Identifizierungscodes von der Zentraleinheit an die Erfassungseinheit gesendet werden.

In einer Ausführungsform ist der optisch erfasste eindeutige Identifizierungscode aus der Menge von eindeutigen Identifizierungscodes in der vorgegebenen Codereihenfolge nach dem letzten angebrachten eindeutigen Identifizierungscode vorgesehen. Wenn der optisch erfasste eindeutige Identifizierungscode aus der Menge von eindeutigen Identifizierungscodes in der vorgegebenen Codereihenfolge nach dem letzten angebrachten eindeutigen Identifizierungscode vorgesehen ist, kann die Anzahl von eindeutigen Identifizierungscodes an den Gegenständen angebracht werden und ein eindeutiger Identifizierungscode optisch erfasst werden, der an keinem Gegenstand angebracht ist, und anhand dieses nicht angebrachten eindeutigen Identifizierungscodes kann auf die angebrachten eindeutigen Identifizierungscodes rückgeschlossen werden. So können beispielsweise die eindeutigen Identifizierungscodes an den Gegenständen angebracht werden, woraufhin die Gegenstände mithilfe einer Gegenstandsverpackung verpackt werden können und erst nachdem die Gegenstände in der Gegenstandsverpackung verpackt sind, die die angebrachten eindeutigen Identifizierungscodes verdecken können, kann das optische Erfassen des eindeutigen Identifizierungscodes durchgeführt werden. Hierdurch kann insbesondere dann ein zeiteffizientes Verfahren bereitgestellt werden, wenn die Gegenstände unmittelbar nach dem Anbringen der eindeutigen Identifizierungscodes mit Gegenstandsverpackungen verpackt werden. Da der optisch erfasste eindeutige Identifizierungscode in der vorgegebenen Codereihenfolge nach dem letzten angebrachten eindeutigen Identifizierungscode vorgesehen ist, können die vor dem optisch erfassten eindeutigen Identifizierungscode vorgesehenen eindeutigen Identifizierungscodes insbesondere dann zuerst an die Gegenstände angebracht werden und anschließend der nicht angebrachte eindeutige Identifizierungscode erfasst werden, wenn die eindeutigen Identifizierungscodes in einer der Codereihenfolge entsprechenden Reihenfolge an den Gegenständen angebracht werden. Beispielsweise kann sich der eindeutige Identifizierungscode, der optisch erfasst wird, an einer Etikettenrolle befinden, von der Etiketten für das Anbringen der eindeutigen Identifizierungscodes verwendet wurden.

In einer Ausführungsform ist der optisch erfasste eindeutige Identifizierungscode aus der Menge von eindeutigen Identifizierungscodes in der vorgegebenen Codereihenfolge vor dem ersten angebrachten eindeutigen Identifizierungscode vorgesehen. Wenn der optisch erfasste eindeutige Identifizierungscode aus der Menge von eindeutigen Identifizierungscodes in der vorgegebenen Codereihenfolge vor dem ersten angebrachten eindeutigen Identifizierungscode vorgesehen ist, kann die Anzahl von eindeutigen Identifizierungscodes an den Gegenständen angebracht werden und ein eindeutiger Identifizierungscode optisch erfasst werden, der an keinem Gegenstand angebracht ist, und anhand dieses nicht angebrachten eindeutigen Identifizierungscodes kann auf die angebrachten eindeutigen Identifizierungscodes rückgeschlossen werden. So kann beispielsweise zunächst ein bereits verwendeter eindeutiger Identifizierungscode optisch erfasst werden, der Teil der Menge von eindeutigen Identifizierungscodes ist, jedoch nicht Teil der Anzahl von eindeutigen Identifizierungscodes ist. Der bereits verwendete eindeutige Identifizierungscode kann beispielsweise ein letzter angebrachter eindeutiger Identifizierungscode sein, der einer anderen Anzahl von eindeutigen Identifizierungscodes angehört, bevorzugt in der Codereihenfolge vor der Anzahl von eindeutigen Identifizierungscodes. Anschließend können beispielsweise die eindeutigen Identifizierungscodes an den Gegenständen angebracht werden, woraufhin die Gegenstände mithilfe einer Gegenstandsverpackung verpackt werden können. Somit kann bereits bevor die Gegenstände in der Gegenstandsverpackung verpackt sind, die die angebrachten eindeutigen Identifizierungscodes verdecken können, das optische Erfassen des eindeutigen Identifizierungscodes durchgeführt werden. Hierdurch kann insbesondere dann ein zeiteffizientes Verfahren bereitgestellt werden, wenn die Gegenstände unmittelbar nach dem Anbringen der eindeutigen Identifizierungscodes mit Gegenstandsverpackungen verpackt werden. Da der optisch erfasste eindeutige Identifizierungscode in der vorgegebenen Codereihenfolge vor dem ersten angebrachten eindeutigen Identifizierungscode vorgesehen ist, können die nach dem optisch erfassten eindeutigen Identifizierungscode vorgesehenen eindeutigen Identifizierungscodes insbesondere dann an die Gegenstände angebracht werden und nachdem der optisch erfasste eindeutige Identifizierungscode erfasst wird, wenn die eindeutigen Identifizierungscodes in einer der Codereihenfolge entsprechenden Reihenfolge an den Gegenständen angebracht werden.

In einer Ausführungsform entspricht der optisch erfasste eindeutige Identifizierungscode aus der Menge von eindeutigen Identifizierungscodes in der vorgegebenen Codereihenfolge dem letzten angebrachten eindeutigen Identifizierungscode. Wenn der optisch erfasste eindeutige Identifizierungscode aus der Menge von eindeutigen Identifizierungscodes in der vorgegebenen Codereihenfolge dem letzten angebrachten eindeutigen Identifizierungscode entspricht, kann die Anzahl der eindeutigen Identifizierungscodes innerhalb der Codereihenfolge den letzten eindeutigen Identifizierungscodes der Menge von eindeutigen Identifizierungscodes entsprechen. Somit wird ein besonders ressourcenschonendes Verfahren bereitgestellt, da die gesamten eindeutigen Identifizierungscodes der Menge von eindeutigen Identifizierungscodes in dem erfindungsgemäßen Verfahren verwendet werden können.

In einer Ausführungsform entspricht der optisch erfasste eindeutige Identifizierungscode aus der Menge von eindeutigen Identifizierungscodes in der vorgegebenen Codereihenfolge dem ersten angebrachten eindeutigen Identifizierungscode. Wenn der optisch erfasste eindeutige Identifizierungscode aus der Menge von eindeutigen Identifizierungscodes in der vorgegebenen Codereihenfolge dem ersten angebrachten eindeutigen Identifizierungscode entspricht, kann die Anzahl der eindeutigen Identifizierungscodes innerhalb der Codereihenfolge den ersten eindeutigen Identifizierungscodes der Menge von eindeutigen Identifizierungscodes entsprechen. Somit wird ein besonders ressourcenschonendes Verfahren bereitgestellt, da die gesamten eindeutigen Identifizierungscodes der Menge von eindeutigen Identifizierungscodes in dem erfindungsgemäßen Verfahren verwendet werden können.

**In** einer Ausführungsform sind der Anzahl von Gegenständen gegenstandsbezogene Daten zugeordnet, wobei das Verfahren außerdem die folgenden Schritte aufweist: Erfassen der gegenstandsbezogenen Daten und Übermitteln der gegenstandsbezogenen Daten an die Zentraleinheit. Bevorzugt repräsentieren die gegenstandsbezogenen Daten eine oder mehrere Eigenschaften der Gegenstände der Anzahl von Gegenständen. Eigenschaften der Anzahl von Gegenständen können beispielsweise sein, dass der Gegenstand ein Produkt oder eine Verpackung ist. Die gegenstandsbezogenen Daten können demnach eine Angabe enthalten, aus der sich schlussfolgern lässt, dass die Gegenstände der Anzahl von Gegenständen Produkte oder Verpackungen von Produkten sind. Insbesondere können die gegenstandsbezogenen Daten - zusätzlich oder alternativ zu der einen oder den mehreren Eigenschaften der Gegenstände - auch Informationen repräsentieren, die im Zusammenhang mit den Gegenständen stehen. Diese Informationen können beispielsweise ein Datum, eine Uhrzeit, eine Produktionslinienkennung, und/oder eine Batchnummer sein. Beispielsweise können die gegenstandsbezogenen Daten ein Herstellungsdatum und/oder Herstellungsuhrzeit eines Gegenstands oder aller Gegenstände der Anzahl von Gegenständen repräsentieren. Alternativ oder zusätzlich können die gegenstandsbezogenen Daten beispielsweise eine Produktionslinienkennung repräsentieren, die eine bestimmte Produktionslinie definiert, in der der Gegenstand oder die Gegenstände hergestellt wurden oder verpackt werden sollen oder in der die Anzahl von eindeutigen Identifizierungscodes an der Anzahl von Gegenständen angebracht wurden oder angebracht werden sollen. Alternativ oder zusätzlich können die gegenstandsbezogenen Daten beispielsweise eine Batchnummer repräsentieren, die beispielsweise für Gegenstände, die am selben Tag produziert wurden, identisch ist.

Insbesondere ist vorgesehen, dass die gegenstandsbezogenen Daten in Form einer ersten zweidimensionalen Darstellung an den Gegenständen angebracht werden. Beispielsweise können die gegenstandsbezogenen Daten an den Gegenständen angebracht werden bevor, während oder nachdem die Anzahl von eindeutigen Identifizierungscodes an der Anzahl von Gegenständen angebracht wird. Die gegenstandsbezogenen Daten, oder zumindest ein Teil hiervon, können in Form einer ersten zweidimensionalen Darstellung an den Gegenständen angebracht sein, sodass an jedem Gegenstand eine die gegenstandsbezogenen Daten repräsentierende erste zweidimensionale Darstellung angebracht ist. Für den Fall, dass die Gegenstände mithilfe einer Gegenstandsverpackung verpackt werden, können die gegenstandsbezogenen Daten in Form einer zweiten zweidimensionalen Darstellung zusätzlich oder alternativ an der Gegenstandsverpackung angebracht werden, sodass an der Gegenstandsverpackung die die gegenstandsbezogenen Daten, oder zumindest einen Teil hiervon, repräsentierende zweite zweidimensionale Darstellung angebracht ist. Insbesondere kann vorgesehen sein, dass ein erster Teil der gegenstandbezogenen Daten in Form der ersten zweidimensionalen Darstellung an den Gegenständen angebracht wird/ist und, dass ein zweiter Teil der gegenstandbezogenen Daten in Form der zweiten zweidimensionalen Darstellung an der Gegenstandsverpackung angebracht wird/ist. Insbesondere ist hierbei vorgesehen, dass sich der erste Teil und der zweite Teil voneinander unterscheidet.

Für den Fall, dass die gegenstandsbezogenen Daten, oder zumindest ein Teil hiervon, in Form einer zweiten zweidimensionalen Darstellung zusätzlich oder alternativ an der Gegenstandsverpackung angebracht sind, kann beispielsweise der eine eindeutige Identifizierungscode aus der Menge von eindeutigen Identifizierungscodes mithilfe der Erfassungseinheit erfasst werden, die Zusatzinformation kann mithilfe der Erfassungseinheit erfasst werden und die an der Gegenstandsverpackung angebrachte zweite zweidimensionale Darstellung kann mithilfe der Erfassungseinheit erfasst werden. Der mithilfe der Erfassungseinheit erfasste eindeutige Identifizierungscode, die mithilfe der Erfassungseinheit erfasste Zusatzinformation und die aus der zweiten zweidimensionalen Darstellung ermittelten gegenstandsbezogenen Daten können sodann an die Zentraleinheit übermittelt werden und in dieser gespeichert werden. In der Zentraleinheit kann außerdem eine Zuordnung zwischen den eindeutigen Identifizierungscodes, Zusatzinformationen und gegenstandsbezogenen Daten gespeichert sein, sodass jedem eindeutigen Identifizierungscode eine Zusatzinformation und gegenstandsbezogenen Daten zugeordnet sind.

Beispielsweise kann die Anzahl von Gegenständen sechs Weinflaschen aufweisen und die Gegenstandsverpackung kann einen Versandkarton aufweisen. An jeder Weinflasche wird ein eindeutiger Identifizierungscode aus der Menge von eindeutigen Identifizierungscodes angebracht. An den Versandkarton wird die zweite zweidimensionale Darstellung angebracht, die einen eindeutigen Versandkartonidentifizierungscode repräsentiert, der ein Beispiel für einen eindeutigen Gegenstandsverpackungsidentifizierungscode ist. Der eindeutige Versandkartonidentifizierungscode unterscheidet sich hierbei von anderen an anderen Versandkartons angebrachten eindeutigen Versandkartonidentifizierungscodes. Mithilfe der Erfassungseinheit wird der erste angebrachte eindeutige Identifizierungscode und der letzte angebrachte eindeutige Identifizierungscode (als Bestandteil der Zusatzinformation) optisch erfasst. Außerdem wird mithilfe der Erfassungseinheit die den eindeutigen Versandkartonidentifizierungscode repräsentierende zweite zweidimensionale Darstellung optisch erfasst. Anhand des eindeutigen Versandkartonidentifizierungscodes kann darauf rückgeschlossen werden, in welchem Versandkarton sich eine bestimmte Weinflasche befindet.

Wie bereits anhand eines Beispiels beschrieben können die Gegenstände mithilfe einer Gegenstandsverpackung verpackt werden. Insbesondere ist es vorteilhaft, wenn die Gegenstände mithilfe mehrerer Gegenstandsverpackungen verpackt werden können, sodass die Gegenstände in Gruppen aufgeteilt sind, wobei jede Gruppe in eine Gegenstandsverpackung der Gegenstandsverpackungen verpackt werden kann. In diesem Fall kann vorgesehen sein, dass zusätzlich dazu, dass an der Anzahl von Gegenständen die Anzahl von eindeutigen Identifizierungscodes aus der Menge von eindeutigen Identifizierungscodes derart angebracht wird, dass an jedem Gegenstand ein eindeutiger Identifizierungscode angebracht wird, an jeder Gegenstandsverpackung der Gegenstandsverpackungen ein eindeutiger Gegenstandsverpackungsidentifizierungscode von eindeutigen Gegenstandsverpackungsidentifizierungscodes angebracht wird. Bevorzugt unterscheiden sich die eindeutigen Gegenstandsverpackungsidentifizierungscodes, sodass anhand eines eindeutigen Gegenstandsverpackungsidentifizierungscodes auf eine bestimmte Gegenstandsverpackung rückgeschlossen werden kann. Für jede Gruppe kann mithilfe der Erfassungseinheit der erste angebrachte eindeutige Identifizierungscode der Gruppe und der letzte angebrachte eindeutige Identifizierungscode (als Bestandteil der Zusatzinformation) der Gruppe optisch erfasst werden. Außerdem kann für jede Gruppe mithilfe der Erfassungseinheit der eindeutige Gegenstandsverpackungsidentifizierungscode optisch erfasst werden, der an der Gegenstandsverpackung angebracht ist, mithilfe der die Gegenstände der Gruppe verpackt werden. Für jede Gruppe kann dann der optisch erfasste erste angebrachte eindeutige Identifizierungscode der Gruppe, der optisch erfasste letzte angebrachte eindeutige Identifizierungscode (als Bestandteil der Zusatzinformation) und der optisch erfasste eindeutige Gegenstandsverpackungsidentifizierungscode an die Zentraleinheit übermittelt werden und in dieser gespeichert werden. Anhand des eindeutigen Gegenstandsverpackungsidentifizierungscodes kann darauf rückgeschlossen werden, in welcher Gegenstandsverpackung sich ein bestimmter Gegenstand oder eine bestimmte Gruppe befindet.

Bevorzugt werden die gegenstandsbezogenen Daten mithilfe der Erfassungseinheit erfasst. Insbesondere können die gegenstandsbezogenen Daten, nachdem sie an die Zentraleinheit übermittelt worden sind in dieser gespeichert werden und den eindeutigen Identifizierungscodes zugeordnet werden. Beispielsweise können die gegenstandsbezogenen Daten in der Zentraleinheit gespeichert sein, wobei jedem eindeutigen Identifizierungscode der Anzahl von eindeutigen Identifizierungscodes die gegenstandsbezogenen Daten zugeordnet sind und auch diese Zuordnung in der Zentraleinheit gespeichert ist. Somit kann für jeden eindeutigen Identifizierungscode auf die gegenstandsbezogenen Daten rückgeschlossen werden. Beispielsweise kann dann, wenn die gegenstandsbezogenen Daten in der Zentraleinheit gespeichert sind und jedem eindeutigen Identifizierungscode der Anzahl von eindeutigen Identifizierungscodes die gegenstandsbezogenen Daten zugeordnet sind, ein bestimmter eindeutiger Identifizierungscode optisch erfasst werden und anschließend anhand des optisch erfassten eindeutigen Identifizierungscodes auf die dem optisch erfassten eindeutigen Identifizierungscode in der Zentraleinheit zugeordneten gegenstandsbezogene Daten rückgeschlossen werden.

**In** einer Ausführungsform weist das Erfassen der gegenstandsbezogenen Daten ein optisches Erfassen auf. Bevorzugt werden die gegenstandsbezogenen Daten mithilfe der Erfassungseinheit optisch erfasst. Die optisch erfassten gegenstandsbezogenen Daten können zur weiteren Analyse herangezogen werden, beispielsweise indem sie an die Zentraleinheit übermittelt werden, dort gespeichert werden und den eindeutigen Identifizierungscodes zugeordnet werden. Insbesondere ist vorgesehen, dass das optische Erfassen ein Scannen oder Fotografieren umfasst.

In einer Ausführungsform weist das Erfassen der gegenstandsbezogenen Daten ein manuelles Erfassen auf. Bevorzugt werden die gegenstandsbezogenen Daten mithilfe der Erfassungseinheit manuell erfasst. Die manuell erfassten gegenstandsbezogenen Daten können zur weiteren Analyse herangezogen werden, beispielsweise indem sie an die Zentraleinheit übermittelt werden, dort gespeichert werden und den eindeutigen Identifizierungscodes zugeordnet werden. Insbesondere ist vorgesehen, dass das manuelle Erfassen ein Eingeben der gegenstandsbezogenen Daten über eine Benutzerschnittstelle der Erfassungseinheit durch einen Benutzer der Erfassungseinheit umfasst.

Bevorzugt werden die optisch erfassten gegenstandsbezogenen Daten, insbesondere bevor sie in der Zentraleinheit gespeichert werden oder bereits bevor sie an die Zentraleinheit übermittelt werden, in einer Plausibilitätsprüfung auf ihre Plausibilität überprüft. Die Plausibilitätsprüfung kann in der Erfassungseinheit durchgeführt werden bevor die optisch erfassten gegenstandsbezogenen Daten an die Zentraleinheit übermittelt werden. Wenn die Plausibilitätsprüfung in der Erfassungseinheit durchgeführt wird, kann eine Übermittlung unplausibler gegenstandsbezogener Daten an die Zentraleinheit vermieden werden. Insbesondere können die gegenstandsbezogenen Daten dann an die Zentraleinheit übermittelt werden, wenn die Plausibilitätsprüfung der gegenstandsbezogenen Daten ergibt, dass diese plausibel sind. In diesem Fall kann dem Benutzer der Erfassungseinheit angezeigt werden, dass die gegenstandsbezogenen Daten plausibel sind. Außerdem können die gegenstandsbezogenen Daten dann an die Zentraleinheit nicht übermittelt werden, wenn die Plausibilitätsprüfung der gegenstandsbezogenen Daten ergibt, dass diese unplausibel sind. In diesem Fall kann dem Benutzer der Erfassungseinheit angezeigt werden, dass die gegenstandsbezogenen Daten unplausibel sind. Für den Fall, dass die gegenstandsbezogenen Daten ein Datum aufweisen, kann in der Plausibilitätsprüfung geprüft werden, ob die Tagesangabe 1 oder 2 stellen aufweist und nicht größer als 31 ist, ob dann ein Punkt kommt, ob die Monatsangabe 1-2 Stellen hat und kleiner als 13 ist und, ob dann wieder ein Punkt kommt und ob das Jahr größer als 1950 ist. Wenn all diese Bedingungen vorliegen, kann geschlussfolgert werden, dass die gegenstandsbezogenen Daten plausibel sind. Wenn eine der genannten Bedingungen nicht vorliegt kann geschlussfolgert werden, dass die gegenstandsbezogenen Daten unplausibel sind. Weiter kann für den Fall, dass die gegenstandsbezogenen Daten eine Batchnummer aufweisen, festgelegt sein, dass die Batchnummer immer mit "B" beginnt und dann 5 rein numerische Stellen aufweist. In diesem Fall kann in der Plausibilitätsprüfung geprüft werden, ob die Batchnummer mit "B" beginnt, ob die Batchnummer aus sechs Zeichen besteht und ob die letzten fünf Zeichen Ziffern sind. Wenn all diese Bedingungen vorliegen, kann geschlussfolgert werden, dass die gegenstandsbezogenen Daten plausibel sind. Wenn eine der genannten Bedingungen nicht vorliegt kann geschlussfolgert werden, dass die gegenstandsbezogenen Daten unplausibel sind.

Ebenso wie die optisch erfassten gegenstandsbezogenen Daten in einer Plausibilitätsprüfung auf ihre Plausibilität überprüft werden können, kann auch der optisch erfasste eine eindeutige Identifizierungscode aus der Menge von eindeutigen Identifizierungscodes und/oder die erfasste Zusatzinformation auf ihre Plausibilität geprüft werden, insbesondere bevor sie in der Zentraleinheit gespeichert werden oder bereits bevor sie an die Zentraleinheit übermittelt werden. Wenn beispielsweise festgelegt ist, dass jeder eindeutige Identifizierungscode zehnstellig und alphanumerisch ist, kann in der Plausibilitätsprüfung geprüft werden, ob der optisch erfasste eindeutige Identifizierungscode zehnstellig und alphanumerisch ist. Wenn beide Bedingungen vorliegen, kann geschlussfolgert werden, dass der optisch erfasste eindeutige Identifizierungscode plausibel ist und dieser kann an die Zentraleinheit übermittelt und dort gespeichert werden. Wenn eine der beiden Bedingungen nicht vorliegt, kann geschlussfolgert werden, dass der optisch erfasste eindeutige Identifizierungscode unplausibel ist. In diesem Fall kann auf eine Übermittlung des eindeutigen Identifizierungscodes and die Zentraleinheit und eine Speicherung des eindeutigen Identifizierungscodes in der Zentraleinheit verzichtet werden. Die in den beiden vorherigen Absätzen beschriebenen Plausibilitätsprüfungen gewährleisten insbesondere eine fehlerfreie oder lediglich mit wenigen Fehlern behaftete Datenstruktur in der Zentraleinheit.

In einer Ausführungsform weist das Verfahren außerdem den folgenden Schritt auf: Zuordnen der erfassten gegenstandsbezogenen Daten zu den angebrachten eindeutigen Identifizierungscodes. Insbesondere ist vorgesehen, dass die angebrachten eindeutigen Identifizierungscodes in der Zentraleinheit gespeichert sind und die gegenstandsbezogenen Daten an die Zentraleinheit übermittelt werden und ebenfalls in der Zentraleinheit gespeichert sind. Wenn die erfassten gegenstandsbezogenen Daten den angebrachten eindeutigen Identifizierungscodes zugeordnet sind, kann ein bestimmter angebrachter eindeutiger Identifizierungscode optisch erfasst werden und anschließend anhand des optisch erfassten angebrachten eindeutigen Identifizierungscodes auf die dem optisch erfassten angebrachten eindeutigen Identifizierungscode zugeordneten gegenstandsbezogene Daten rückgeschlossen werden.

In einer Ausführungsform bildet die Anzahl von Gegenständen eine vorgegebene Gegenständereihenfolge, die einen ersten Gegenstand der Anzahl von Gegenständen und einen letzten Gegenstand der Anzahl von Gegenständen definiert, wobei die eindeutigen Identifizierungscodes der Anzahl von eindeutigen Identifizierungscodes nacheinander in einer der vorgegebenen Codereihenfolge entsprechenden Reihenfolge an den Gegenständen angebracht werden, sodass an dem ersten Gegenstand der erste eindeutige Identifizierungscode und an dem letzten Gegenstand der letzte eindeutige Identifizierungscode angebracht wird. Über die vorgegebene Gegenständereihenfolge kann auf die Zuordnung der eindeutigen Identifizierungscodes zu den Gegenständen Einfluss genommen werden. Beispielsweise kann durch Ändern der vorgegebenen Gegenständereihenfolge die Zuordnung der eindeutigen Identifizierungscodes zu den Gegenständen geändert werden. Weiter kann mithilfe der Codereihenfolge und der Gegenständereihenfolge und dem Umstand, dass die eindeutigen Identifizierungscodes der Anzahl von eindeutigen Identifizierungscodes in einer der vorgegebenen Codereihenfolge entsprechenden Reihenfolge an den Gegenständen angebracht werden, die Zuordnung der eindeutigen Identifizierungscodes zu den Gegenständen bereits vor dem Anbringen der eindeutigen Identifizierungscodes an die Gegenstände bekannt und beispielsweise in der Zentraleinheit gespeichert sein. Insbesondere kann mithilfe der Codereihenfolge und der Gegenständereihenfolge und dem Umstand, dass die eindeutigen Identifizierungscodes der Anzahl von eindeutigen Identifizierungscodes in einer der vorgegebenen Codereihenfolge entsprechenden Reihenfolge an den Gegenständen angebracht werden, die Zuordnung der eindeutigen Identifizierungscodes zu den gegenstandsbezogenen Daten bereits vor dem Anbringen der eindeutigen Identifizierungscodes an die Gegenstände bekannt und beispielsweise in der Zentraleinheit gespeichert sein. Dies ist insbesondere dann vorteilhaft, wenn sich die gegenstandsbezogenen Daten der Gegenstände oder zumindest für einige Gegenstandspaare voneinander unterscheiden. Insbesondere kann in diesem Fall die Zuordnung der eindeutigen Identifizierungscodes zu den gegenstandsbezogenen Daten vor dem Anbringen der Anzahl von eindeutigen Identifizierungscodes aus der Menge von eindeutigen Identifizierungscodes an der Anzahl von Gegenständen bei weiterführenden Verfahrensschritten berücksichtigt werden. Weiter kann dann, wenn die aktuelle Zuordnung der eindeutigen Identifizierungscodes zu den gegenstandsbezogenen Daten bei der vorgegebenen Codereihenfolge und dann, wenn die eindeutigen Identifizierungscodes der Anzahl von eindeutigen Identifizierungscodes, insbesondere nacheinander, in einer der vorgegebenen Codereihenfolge entsprechenden Reihenfolge an den Gegenständen angebracht werden, auf die aktuelle Zuordnung der eindeutigen Identifizierungscodes zu den gegenstandsbezogenen Daten vor dem Anbringen der Anzahl von eindeutigen Identifizierungscodes aus der Menge von eindeutigen Identifizierungscodes an der Anzahl von Gegenständen Einfluss genommen werden. Insbesondere können die Gegenstände anhand disjunkter Eigenschaften gruppiert werden, wobei die Gegenstände einer Gruppe von Gegenständen mit einer bestimmten disjunkten Eigenschaft in der Gegenständereihenfolge aneinander angrenzen. In diesem Fall kann der Speicherbedarf der Zuordnung der eindeutigen Identifizierungscodes zu den gegenstandsbezogenen Daten deutlich reduziert werden, da beispielsweise lediglich der erste Gegenstand einer bestimmten Gruppe von Gegenständen mit einer bestimmten disjunkten Eigenschaft innerhalb der Gegenständereihenfolge und der letzte Gegenstand der bestimmten Gruppe von Gegenständen mit der bestimmten disjunkten Eigenschaft innerhalb der Gegenständereihenfolge sowie die disjunkte Eigenschaft beispielsweise in der Zentraleinheit gespeichert werden müssen.

In einer Ausführungsform weist das Verfahren außerdem den folgenden Schritt auf: Herstellen der Menge von Etiketten so, dass die Etiketten nacheinander in der vorgegebenen Etikettenreihenfolge hergestellt werden. Insbesondere ist vorgesehen, dass Informationen, die die Codereihenfolge repräsentieren in der Zentraleinheit gespeichert sind. Beispielsweise kann vorgesehen sein, dass zusätzlich eine Information in der Zentraleinheit gespeichert ist, die repräsentiert, dass die Etikettenreihenfolge der Codereihenfolge entspricht. Da die Etikettenreihenfolge der Codereihenfolge entsprechen kann und die Etiketten nacheinander in der vorgegebenen Etikettenreihenfolge hergestellt werden können, können die eindeutigen Identifizierungscodes in der Codereihenfolge nacheinander auf die unbedruckten - insbesondere noch nicht mit den eindeutigen Identifizierungscodes bedruckten - Etiketten gedruckt werden, sodass die mit den eindeutigen Identifizierungscodes versehenen Etiketten bereits aufgerollte werden können um die Etikettenrolle zu bilden bevor sämtliche eindeutige Identifizierungscodes der Menge von eindeutigen Identifizierungscodes auf den Etiketten der Menge von Etiketten aufgebracht sind. Hierdurch kann die Herstellung der Etikettenrolle besonders platzsparend und zeiteffizient gestaltet werden.

In einer Ausführungsform umfasst das Anbringen der Anzahl von Etiketten an der Anzahl von Gegenständen ein Kleben. Ein Kleben stellt eine besonders einfache stoffschlüssige Verbindung zwischen den Etiketten und den Gegenständen dar.

In einer Ausführungsform umfasst das Anbringen der Anzahl von eindeutigen Identifizierungscodes aus der Menge von eindeutigen Identifizierungscodes an der Anzahl von Gegenständen ein Drucken der Anzahl von eindeutigen Identifizierungscodes aus der Menge von eindeutigen Identifizierungscodes auf die Anzahl von Gegenständen. In diesem Fall können die eindeutigen Identifizierungscodes sowie die Codereihenfolge innerhalb der Zentraleinheit generiert werden - ohne, dass die eindeutigen Identifizierungscodes auf einen Träger, wie beispielsweise ein Etikett, abgedruckt werden müssen, und anschließend können die eindeutigen Identifizierungscodes in der Zentraleinheit gespeichert werden. Durch diese bevorzugte Ausführungsform des Verfahrens können die eindeutigen Identifizierungscodes an den Gegenständen angebracht werden und gleichzeitig kann auf eine Verwendung von Etiketten verzichtet werden, was zu einem besonders ressourcenschonenden Verfahren führt.

In einer Ausführungsform weist das Verfahren außerdem die folgenden Schritte auf: optisches Erfassen eines eindeutigen Identifizierungscodes; Rückschließen anhand des optisch erfassten eindeutigen Identifizierungscodes auf die dem optisch erfassten eindeutigen Identifizierungscode zugeordneten gegenstandsbezogene Daten; und Anzeigen der dem optisch erfassten eindeutigen Identifizierungscode zugeordneten gegenstandsbezogene Daten. Insbesondere für den Fall, dass auf einem Gegenstand angebrachte gegenstandsbezogene Daten so beschädigt sind, dass ein Benutzer diese Daten nicht erkennen kann oder dass aus auf dem Gegenstand angebrachte Informationen - neben dem eindeutigen Identifizierungscode -nicht auf die gegenstandsbezogenen Daten rückgeschlossen werden kann, bietet das Rückschließen anhand des optisch erfassten eindeutigen Identifizierungscodes auf die dem optisch erfassten eindeutigen Identifizierungscode zugeordneten gegenstandsbezogenen Daten ein zuverlässiges Verfahren, um die dem eindeutigen Identifizierungscode zugeordneten gegenstandsbezogenen Daten, insbesondere einem Benutzer der Erfassungseinheit, anzuzeigen.

Auch wenn die Verfahrensschritte in einer bestimmten Reihenfolge beschrieben sind, ist die vorliegende Erfindung nicht auf diese Reihenfolge beschränkt. Vielmehr können die einzelnen Verfahrensschritte in beliebiger sinnvoller Reihenfolg, insbesondere auch zumindest abschnittsweise zeitlich parallel zueinander, durchgeführt werden.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt eine schematische Ansicht einer Etikettenrolle mit einer Menge von Etiketten, von Gegenständen einer Anzahl von Gegenständen und einer Fördervorrichtung,
- Figur 2: zeigt eine schematische Ansicht einer Erfassungseinheit sowie der Anzahl von Gegenständen von denen drei Gegenstände in Figur 1 dargestellt sind, wobei eine Anzahl von Etiketten der Menge von Etiketten der in Figur 1 dargestellten Etikettenrolle an den Gegenständen angebracht sind,
- Figur 3: zeigt eine schematische Ansicht der Erfassungseinheit in Figur 2,
- Figur 4: zeigt eine schematische Ansicht eines Gegenstands der Anzahl von Gegenständen aus Figur 2 sowie die Erfassungseinheit aus Figur 2,
- Figur 5: zeigt eine schematische Ansicht der Erfassungseinheit aus Figur 2 sowie einer Zentraleinheit,
- Figur 6: zeigt eine schematische Ansicht der Erfassungseinheit aus Figur 2,
- Figur 7: zeigt eine schematische Ansicht eines Benutzers der Erfassungseinheit, der Erfassungseinheit sowie eines Gegenstands,
- Figur 8: zeigt eine schematische Ansicht eines Ablaufdiagramms einer Ausführungsform des erfindungsgemäßen Verfahrens, und
- Figur 9: zeigt eine schematische Ansicht einer Ausführungsform eines erfindungsgemäßen Systems.

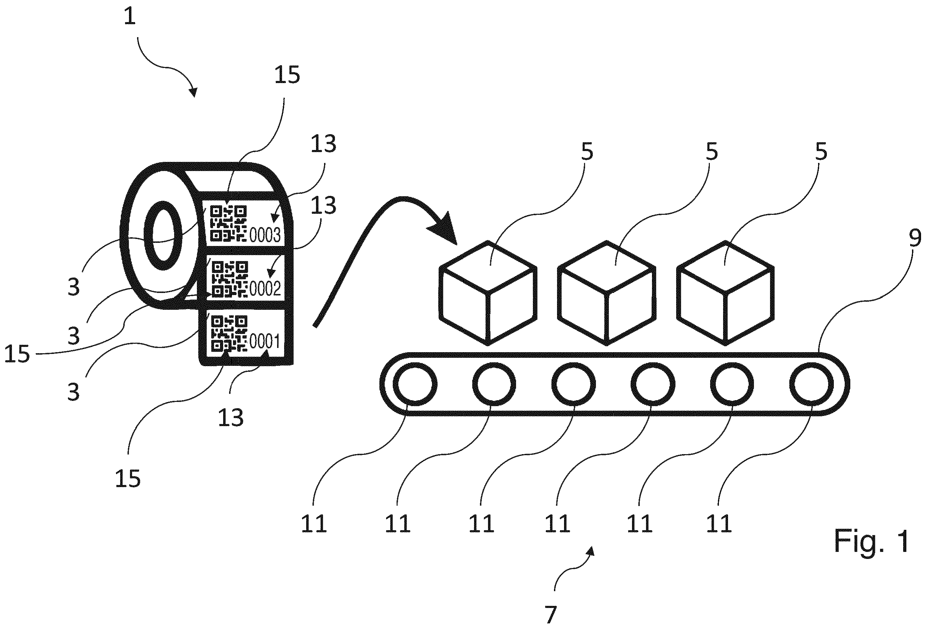

Figur 1 zeigt eine schematische Ansicht einer Etikettenrolle 1 mit einer Menge von Etiketten 3, die eine Anzahl von Etiketten 3 aufweist. Die Menge von Etiketten 3 weist zehntausend Etiketten 3 auf und die Anzahl von Etiketten 3 weist eintausend Etiketten 3 auf. Die Menge von Etiketten 3 weist somit mehr Etiketten 3 auf als die Anzahl von Etiketten 3. Dies ist ein Beispiel dafür, dass eine Anzahl von Etiketten 3 aus einer Menge von Etiketten 3 vorgesehen ist. Die Menge von Etiketten 3 bildet eine vorgegebene Etikettenreihenfolge.

Weiter ist in Figur 1 eine schematische Ansicht von Gegenständen 5 einer Anzahl von Gegenständen 5 dargestellt. In Figur 1 sind beispielhaft drei Gegenstände 5 dargestellt, wobei die Anzahl von Gegenständen 5 im hier dargestellten Ausführungsbeispiel eintausend Gegenstände 5 aufweist. Außerdem ist in Figur 1 eine Fördervorrichtung 7 dargestellt, die ein Förderband 9 sowie mehrere Förderrollen 11 aufweist, die das Förderband 9 reibschlüssig umgibt. Die Gegenstände 5 können auf das Förderband 9 positioniert werden und durch Bewegen des Förderbands 9 über die Förderrollen 11 bewegt werden. Beispielsweise können die Gegenstände 5 mithilfe der Fördervorrichtung 7 an einer Anbringeinheit vorbeigeführt werden, sodass mithilfe eines im Vergleich zu dem Förderband 9 stationär angeordnete Anbringeinheit die Anzahl von Etiketten 3 an der Anzahl von Gegenständen 5 angebracht werden kann.

Jedes Etikett 3 der Menge von Etiketten 3 weist einen eindeutigen Identifizierungscode 13 einer Menge von eindeutigen Identifizierungscodes 13 auf, die sich voneinander unterscheiden. Die eindeutigen Identifizierungscodes 13 bilden eine vorgegebene Codereihenfolge, die einen ersten eindeutigen Identifizierungscode 13 und einen letzten eindeutigen Identifizierungscode 13 definiert. Weiter bildet die Menge von Etiketten 3 eine vorgegebene Etikettenreihenfolge. Hierbei entspricht die Etikettenreihenfolge der Codereihenfolge, sodass in der Etikettenreihenfolge ein erstes Etikett 3 mit dem ersten eindeutigen Identifizierungscode 13 und ein letztes Etikett 3 mit dem letzten eindeutigen Identifizierungscode 13 vorgesehen sind.

Außerdem weist jedes Etikett 3 einen QR-Code 15 auf, der optisch zu erfassende gegenstandsbezogene Daten repräsentiert. In dem in Figur 1 dargestellten Ausführungsbeispiel sind die QR-Codes 15 zumindest der Etiketten 3 der Anzahl von Etiketten 3 identisch. Dies ist besonders dann vorteilhaft, wenn bereits vor der Herstellung der Etikettenrolle 1 bekannt ist, dass die Etiketten 3 der Anzahl von Etiketten 3 an Gegenständen angebracht werden sollen, die dieselben Eigenschaften haben, da somit die eindeutigen Identifizierungscodes 13 und die optisch zu erfassende gegenstandsbezogenen Daten zusammen, bevorzugt gleichzeitig, an jedem Gegenstand 5 der Gegenstände 5 angebracht werden können, sodass ein besonders zeiteffizientes Anbringen der eindeutigen Identifizierungscodes 13 und der optisch zu erfassende gegenstandsbezogenen Daten an den Gegenständen 5 gewährleistet ist. Der Anzahl von Gegenständen können also gegenstandsbezogene Daten zugeordnet sein, die durch die QR-Codes 15 repräsentiert sein können. Zusätzlich zu den optisch zu erfassenden gegenstandsbezogenen Daten können die gegenstandsbezogenen Daten auch manuell zu erfassende gegenstandsbezogene Daten aufweisen. In diesem Fall werden die manuell zu erfassenden gegenstandsbezogenen Daten manuell erfasst.

Durch den in Figur 1 dargestellten Pfeil ist schematisch ein Schritt des erfindungsgemäßen Verfahrens dargestellt, in dem die Anzahl von Etiketten 3 aus der Menge von Etiketten 3 an der Anzahl von Gegenständen 5 durch Kleben angebracht wird, sodass an jedem Gegenstand 5 ein Etikett 3 angebracht wird. Da jedes Etikett 3 der Anzahl von Etiketten 3 einen eindeutigen Identifizierungscode 13 aufweist, werden durch das Anbringen der Etiketten 3 der Anzahl von Etiketten 3 an den Gegenständen 5 der Anzahl von Gegenständen 5 eine Anzahl von eindeutigen Identifizierungscodes 13 aus einer Menge von eindeutigen Identifizierungscodes 13 an der Anzahl von Gegenständen 5 angebracht, sodass an jedem Gegenstand 5 der Anzahl von Gegenständen 5 ein eindeutiger Identifizierungscode 13 angebracht wird.

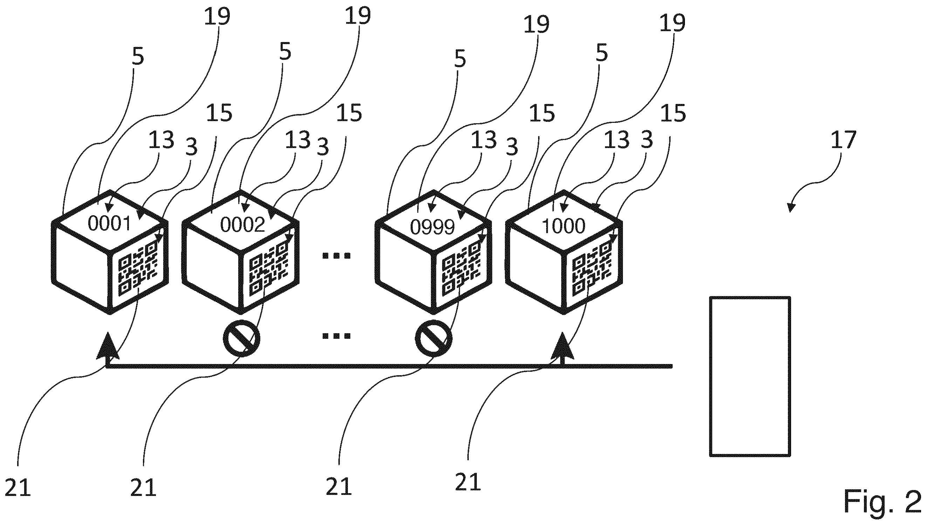

Figur 2 zeigt eine schematische Ansicht einer Erfassungseinheit 17. Weiter zeigt Figur 2 eine schematische Ansicht der Anzahl von Gegenständen 5 von denen drei Gegenstände 5 in Figur 1 dargestellt sind. Die Anzahl von Etiketten 3 der Menge von Etiketten 3 der in Figur 1 dargestellten Etikettenrolle 1 ist an den Gegenständen 5 angebracht. In der hier dargestellten Ausführungsform sind die Etiketten 3 zweiteilig ausgeführt, wobei ein erster Teil 19 jedes Etiketts 3 einen eindeutigen Identifizierungscode 13 der eindeutigen Identifizierungscodes 13 aufweist und ein zweiter Teil 21 jedes Etiketts 3 einen QR-Code 15 der QR-Codes 15 aufweist. Die zweiteilige Ausführung der Etiketten 3 gewährleistet, dass der erste Teil 19 und der zweite Teil 21 jedes Etiketts 3 unabhängig voneinander positioniert und/oder unabhängig voneinander orientiert an dem Gegenstand 5 angebracht werden kann.

Wie bereits beschrieben, bilden die eindeutigen Identifizierungscodes 13 eine vorgegebene Codereihenfolge, die einen ersten eindeutigen Identifizierungscode 13 und einen letzten eindeutigen Identifizierungscode 13 definiert. In dem hier dargestellten Ausführungsbeispiel sind die angebrachten eindeutigen Identifizierungscodes 13 die eindeutigen Identifizierungscodes 13 der Anzahl von eindeutigen Identifizierungscodes 13. Der erste angebrachte eindeutige Identifizierungscode 13 ist eins ("0001") und der letzte angebrachte eindeutige Identifizierungscode 13 ist eintausend ("1000"). Die in der Codereihenfolge zwischen dem ersten angebrachten eindeutigen Identifizierungscode 13 und dem letzten angebrachten eindeutigen Identifizierungscode 13 positionierten eindeutigen Identifizierungscodes 13 zwei ("002") bis neunhundertneunundneunzig ("999") sind in aufsteigender Reihenfolge - von dem ersten angebrachten eindeutigen Identifizierungscode 13 zu dem letzten angebrachten eindeutigen Identifizierungscode 13 gesehen - angeordnet und positioniert.

Wie ebenfalls bereits beschrieben, bildet die Menge von Etiketten 3 eine vorgegebene Etikettenreihenfolge, wobei die Etikettenreihenfolge der Codereihenfolge entspricht. In dem hier dargestellten Ausführungsbeispiel sind die angebrachten Etiketten 3 die Etiketten 3 der Anzahl von Etiketten 3. Das erste angebrachte Etikett 3 weist den ersten angebrachten eindeutigen Identifizierungscode 13 ("0001") auf und das letzte angebrachte Etikett 3 weist den letzten angebrachten eindeutigen Identifizierungscode 13 ("1000") auf. Die in der Etikettenreihenfolge zwischen dem ersten angebrachten Etikett 3 und dem letzten angebrachten Etikett 3 positionierten Etiketten 3 weisen die in der Codereihenfolge zwischen dem ersten angebrachten eindeutigen Identifizierungscode 13 und dem letzten angebrachten eindeutigen Identifizierungscode 13 positionierten eindeutigen Identifizierungscodes 13 zwei ("0002") bis neunhundertneunundneunzig ("0999") in aufsteigender Reihenfolge - von dem ersten angebrachten eindeutigen Identifizierungscode 13 zu dem letzten angebrachten eindeutigen Identifizierungscode 13 gesehen - auf. In Figur 2 ist somit sowohl die Codereihenfolge als auch die Etikettenreihenfolge von links nach rechts definiert.

Unterhalb der Gegenstände 5 in Figur 2 ist schematisch ein weiterer Schritt des erfindungsgemäßen Verfahrens dargestellt, in dem mit den zwei Pfeilen angedeutet ist, dass der erste angebrachte eindeutige Identifizierungscode 13 ("0001") und der letzte angebrachte eindeutige Identifizierungscode 13 ("1000") mithilfe der Erfassungseinheit 17 optisch erfasst werden. Hierbei werden sowohl das erste angebrachte Etikett 3 als auch das letzte angebrachte Etikett 3 mithilfe der Erfassungseinheit 17 optisch erfasst. Der erste angebrachte eindeutige Identifizierungscode 13 kann auch als "eindeutiger Identifizierungscode" gemäß Patentanspruch 1 und der letzte angebrachte eindeutige Identifizierungscode kann auch als "weiterer eindeutiger Identifizierungscode" gemäß Patentanspruch 2 angesehen werden, wobei der letzte angebrachte eindeutige Identifizierungscode 13 Bestandteil einer Zusatzinformation ist, die von der Erfassungseinheit 17 optisch erfasst wird.

Weiter werden zusätzlich zu dem ersten angebrachten eindeutigen Identifizierungscode 13 ("0001") und dem letzten angebrachten eindeutigen Identifizierungscode 13 ("1000") sowohl der QR-Code 15 des ersten angebrachten Etiketts 3 als auch der QR-Code 15 des zweiten angebrachten Etiketts 3 mithilfe der Erfassungseinheit 17 optisch erfasst, sodass die gegenstandsbezogenen Daten von der Erfassungseinheit 17 optisch erfasst werden.

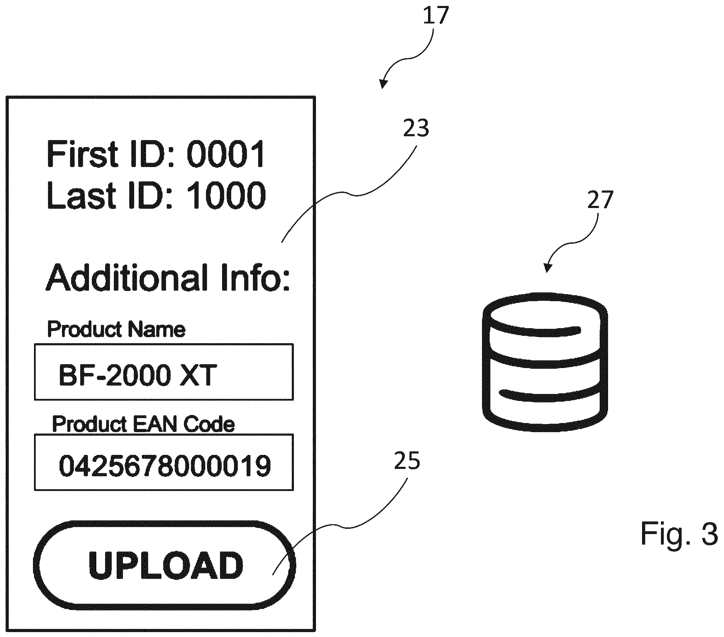

Figur 3 zeigt eine schematische Ansicht der Erfassungseinheit 17 aus Figur 2. Die Erfassungseinheit 17 weist eine Anzeigeeinheit 23 auf, die als Touchscreen ausgebildet ist. Die Anzeigeeinheit 23 zeigt den ersten angebrachten eindeutigen Identifizierungsode 13 ("0001"), den letzten angebrachten eindeutigen Identifizierungscode 13 ("1000") und gegenstandsbezogene Daten in Form eines Produktnamens ("BF-2000 XT") und eines Produkt-EAN-Codes ("0425678000019") an, die mithilfe jedes QR-Codes 15 in codierter Form an den Gegenständen 5 angebracht sind. Um diese Informationen anzuzeigen, werden der optisch erfasste erste angebrachte eindeutige Identifizierungsode 13 ("0001"), der optisch erfasste letzte angebrachte eindeutige Identifizierungscode 13 ("1000") und die optisch erfassten gegenstandsbezogenen Daten in der Erfassungseinheit 17 gespeichert. Weiter weist die Anzeigeeinheit 23 ein Übermittlungsfeld 25 auf, das bei Berührung durch einen Benutzer der Erfassungseinheit 17 einen Versuch unternimmt, den optisch erfassten ersten angebrachten eindeutigen Identifizierungsode 13 ("0001"), den optisch erfassten letzten angebrachten eindeutigen Identifizierungscode 13 ("1000") und die optisch erfassten gegenstandsbezogenen Daten von der Erfassungseinheit 17 an eine Zentraleinheit 27 zu übermitteln.

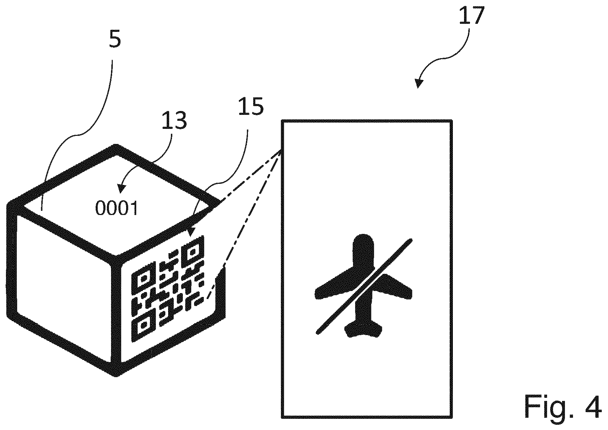

Figur 4 zeigt eine schematische Ansicht eines Gegenstands 5 der Anzahl von Gegenständen 5 aus Figur 2 sowie die Erfassungseinheit 17 aus Figur 2. Die Erfassungseinheit 17 ist in Figur 4 in einem Offlinezustand und beim Erfassen des eindeutigen Identifizierungscodes 13 und des QR-Codes 15 dargestellt. In dem Offlinezustand wird der eindeutige Identifizierungscode 13 und der QR-Code 15 in der Erfassungseinheit 17 gespeichert.

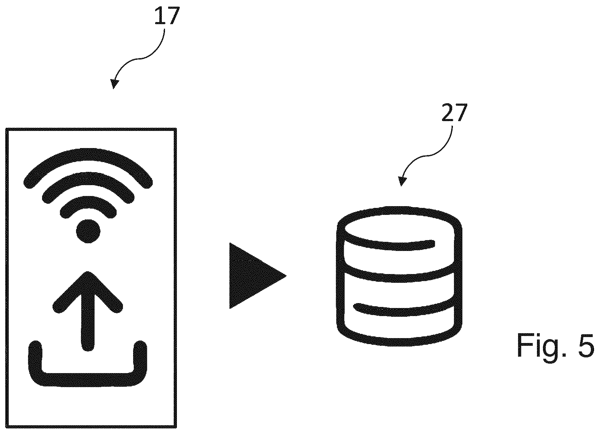

Figur 5 zeigt eine schematische Ansicht der Erfassungseinheit 17 aus Figur 2 sowie der Zentraleinheit 27. Die Erfassungseinheit 17 ist in Figur 5 in einem Onlinezustand. Wenn die Erfassungseinheit 17 in dem Onlinezustand ist, wird der in Figur 4 dargestellte eindeutigen Identifizierungscode 13 und der in Figur 4 dargestellte QR-Code 15 oder die in dem in Figur 4 dargestellten QR-Code 15 codiert vorliegende Information an die Zentraleinheit 27 übermittelt, nachdem der Benutzer der Erfassungseinheit 17 das in Figur 4 dargestellte Übermittlungsfeld 25 berührt hat.

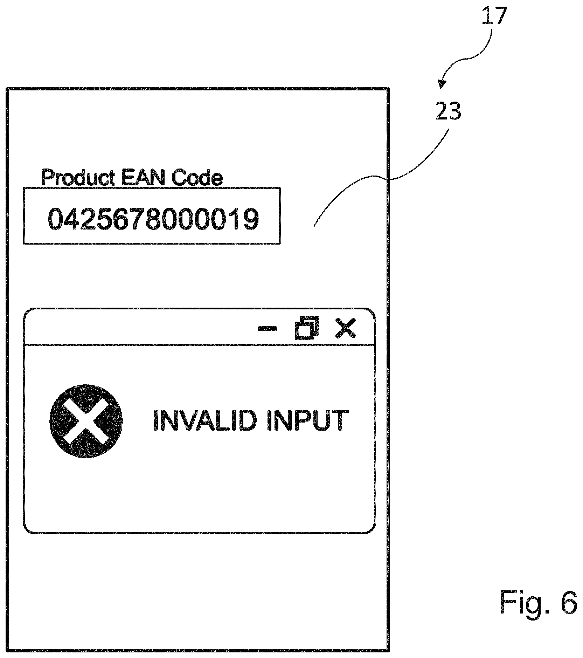

Figur 6 zeigt eine schematische Ansicht der Erfassungseinheit 17 aus Figur 2, wobei die Anzeigeeinheit 23 den Produkt-EAN-Code "0425678000019" sowie eine Angabe anzeigt, dass eine Eingabe an der Erfassungseinheit ungültig ist. Dies kann dann der Fall sein, wenn der Produkt-EAN-Code "0425678000019" beispielsweise manuell mithilfe der Erfassungseinheit 17 erfasst wurde, an die in Figur 5 dargestellte Zentraleinheit 27 übermittelt wurde, in der Zentraleinheit 27 jedoch kein Produkt-EAN-Code "0425678000019" hinterlegt ist und die Zentraleinheit 27 eine Information hierüber an die Erfassungseinheit 17 übermittelt hat.

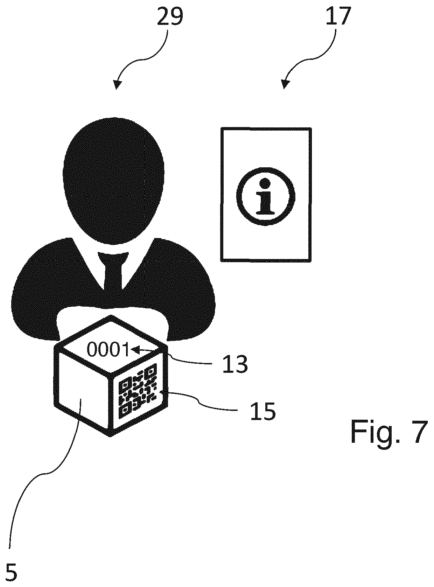

Figur 7 zeigt eine schematische Ansicht eines Benutzers 29 der Erfassungseinheit 17 sowie eines Gegenstands 5 mit dem eindeutigen Identifizierungscode 13 "0001" und dem QR-Code 15. Der Benutzer 29 kann den eindeutigen Identifizierungscode 13 mithilfe der Erfassungseinheit 17 optisch erfassen. Der optisch erfasste eindeutige Identifizierungscode 13 kann dann an die Zentraleinheit 27 übermittelt werden. In der Zentraleinheit 27 kann dann anhand des optisch erfassten eindeutigen Identifizierungscodes 13 auf die dem optisch erfassten eindeutigen Identifizierungscode 13 zugeordneten gegenstandsbezogenen Daten rückgeschlossen werden. Die gegenstandsbezogenen Daten können dann von der Zentraleinheit an die Erfassungseinheit übermittelt werden. Anschließend können die dem optisch erfassten eindeutigen Identifizierungscode 13 zugeordneten gegenstandsbezogene Daten von der Erfassungseinheit 17 angezeigt werden. Insbesondere für den Fall, dass der QR-Code so beschädigt ist, dass aus ihm die in ihm in kodierter Form vorliegenden gegenstandsbezogenen Daten nicht mehr durch einen Dekodierungsvorgang ermittelt werden können, bietet das Rückschließen anhand des optisch erfassten eindeutigen Identifizierungscodes 13 auf die dem optisch erfassten eindeutigen Identifizierungscode 13 zugeordneten gegenstandsbezogenen Daten ein zuverlässiges Verfahren, um die dem eindeutigen Identifizierungscode 13 zugeordneten gegenstandsbezogenen Daten anzuzeigen.

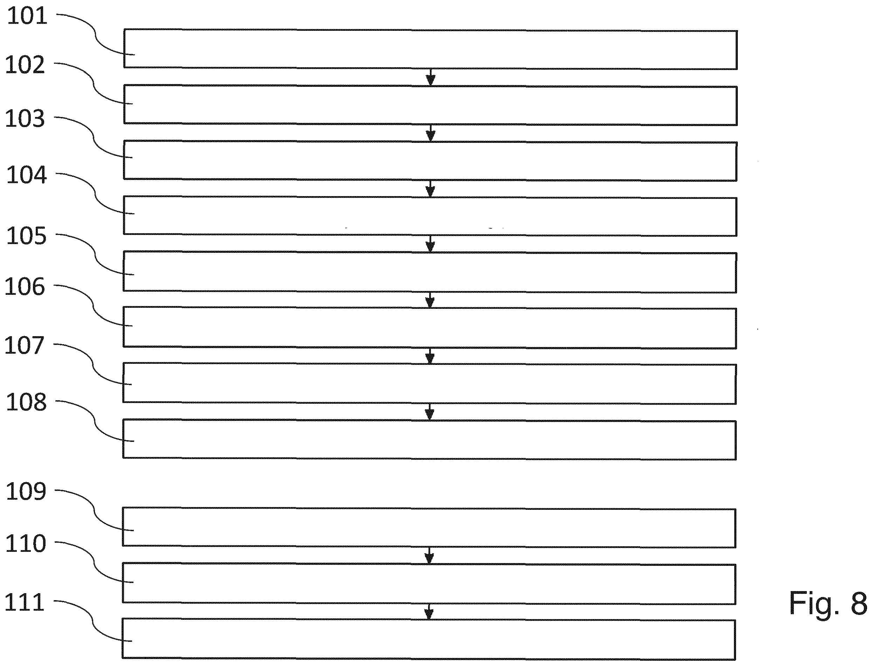

Figur 8 zeigt eine schematische Ansicht eines Ablaufdiagramms einer Ausführungsform des erfindungsgemäßen Verfahrens. In einem ersten Schritt 101 werden die eindeutigen Identifizierungscodes 13 der Menge von eindeutigen Identifizierungscodes 13 hergestellt. In dem hier beschriebenen Ausführungsbeispiel werden hierfür Etiketten 3 einer Menge von Etiketten 3 der in Figur 1 dargestellten Etikettenrolle 1 hergestellt. Jedes hergestellte Etikett 3 der Menge von Etiketten 3 weist einen eindeutigen Identifizierungscode 13 der Menge von eindeutigen Identifizierungscodes 13 auf. Auf der hergestellten Etikettenrolle 1 bildet die Menge von Etiketten 3 eine vorgegebene Etikettenreihenfolge - von dem ersten Etikett 3 der Etikettenrolle 1 (mit dem eindeutigen Identifizierungscode 13 "0001"), das ganz außen in der Etikettenrolle 1 angeordnet ist, zu dem letzten Etikett 3 der Etikettenrolle 1 (mit dem eindeutigen Identifizierungscode 13 "10000"), das ganz innen in der Etikettenrolle angeordnet ist, gesehen. Außerdem bilden die eindeutigen Identifizierungscodes 13 eine vorgegebene Codereihenfolge, die der Etikettenreihenfolge entspricht. In dem hier beschriebenen Ausführungsbeispiel wird die Menge von Etiketten 3 so hergestellt, dass die Etiketten 3 nacheinander in der vorgegebenen Etikettenreihenfolge hergestellt werden. Da die Etikettenreihenfolge der Codereihenfolge entspricht und die Etiketten nacheinander in der vorgegebenen Etikettenreihenfolge hergestellt werden, können die eindeutigen Identifizierungscodes 13 in der Codereihenfolge nacheinander auf die unbedruckten Etiketten 3 gedruckt werden, sodass die mit den eindeutigen Identifizierungscodes 13 versehenen Etiketten 3 bereits aufgerollte werden können um die Etikettenrolle 1 zu bilden bevor sämtliche eindeutige Identifizierungscodes 13 der Menge von eindeutigen Identifizierungscodes 13 auf den Etiketten 3 der Menge von Etiketten 3 aufgebracht sind. Hierdurch kann die Herstellung der Etikettenrolle 1 besonders platzsparend und zeiteffizient gestaltet werden.

In einem zweiten Schritt 102 werden die eindeutigen Identifizierungscodes 13 der Menge von eindeutigen Identifizierungscodes 13 beispielsweise durch Scannen optisch erfasst und an die Zentraleinheit 27 übermittelt. Das optische Erfassen kann beispielsweise während der Durchführung von dem ersten Schritt 101 geschehen, wodurch ein besonders zeiteffizientes Verfahren bereitgestellt wird. Zusätzlich zu dem optischen Erfassen der eindeutigen Identifizierungscodes 13 wird die Codereihenfolge, die die Menge der eindeutigen Identifizierungscodes 13 definiert, ermittelt. Die Ermittlung der Codereihenfolge kann beispielsweise dadurch gewährleistet werden, dass die eindeutigen Identifizierungscodes 13 in der vorgegebenen Codereihenfolge zeitlich nacheinander, d.h. von "0001" bis "10000" in aufsteigender Reihenfolge zeitlich nacheinander, optisch erfasst werden, die so geordneten eindeutigen Identifizierungscodes 13 an die Zentraleinheit übermittelt werden und die eindeutigen Identifizierungscodes 13 zusammen mit der Codereihenfolge in der Zentraleinheit 27 gespeichert werden. Nach dem Durchführen dieser Schritte sind in der Zentraleinheit 27 demnach die eindeutigen Identifizierungscodes 13 der Menge von eindeutigen Identifizierungscodes 13 sowie die Codereihenfolge gespeichert, wobei die Codereihenfolge durch die Positionen der eindeutigen Identifizierungscodes 13 auf der Etikettenrolle definiert ist.

In einem dritten Schritt 103 wird die Anzahl von Etiketten 3 (die Etiketten 3 mit den eindeutigen Identifizierungscodes "0001" bis "1000") aus der Menge von Etiketten 3 an der Anzahl von Gegenständen 5 angebracht. Nach dem Anbringen der Anzahl von Etiketten 3 an der Anzahl von Gegenständen 5 ist an jedem Gegenstand 5 der Anzahl von Gegenständen ein Etikett 3 der Anzahl von Etiketten 3 angebracht, was auch in Figur 2 beispielhaft dargestellt ist. Durch das Anbringen der Etiketten 3 der Anzahl von Etiketten 3, die die Anzahl von eindeutigen Identifizierungscodes 13 aufweisen, werden somit die Anzahl von eindeutigen Identifizierungscodes 13 aus der Menge von eindeutigen Identifizierungscodes 13 an der Anzahl von Gegenständen angebracht. Nach dem Anbringen der Anzahl von eindeutigen Identifizierungscodes 13 können diese eindeutigen Identifizierungscodes 13 auch als angebrachte eindeutige Identifizierungscodes 13 bezeichnet werden. In dem vorliegenden Beispiel weist das erste angebrachte Etikett 3 den ersten angebrachten eindeutigen Identifizierungscode 13 ("0001") auf und das letzte angebrachte Etikett 3 weist den letzten angebrachten eindeutigen Identifizierungscode 13 ("1000") auf.

In dem hier beschriebenen Ausführungsbeispiel bildet die Anzahl von Gegenständen eine vorgegebene Gegenständereihenfolge, die einen ersten Gegenstand 5 der Anzahl von Gegenständen 5 und einen letzten Gegenstand 5 der Anzahl von Gegenständen 5 definiert, wobei die eindeutigen Identifizierungscodes 13 der Anzahl von eindeutigen Identifizierungscodes 13, insbesondere nacheinander, in einer der vorgegebenen Codereihenfolge entsprechenden Reihenfolge an den Gegenständen angebracht werden, sodass an dem ersten Gegenstand 5 der erste eindeutige Identifizierungscode 13 und an dem letzten Gegenstand 5 der letzte eindeutige Identifizierungscode 13 angebracht wird. Über die vorgegebene Gegenständereihenfolge kann auf die Zuordnung der eindeutigen Identifizierungscodes 13 zu den Gegenständen 5 Einfluss genommen werden. Beispielsweise kann durch Ändern der vorgegebenen Gegenständereihenfolge die Zuordnung der eindeutigen Identifizierungscodes 13 zu den Gegenständen geändert werden. Weiter kann mithilfe der Codereihenfolge und der Gegenständereihenfolge und dem Umstand, dass die eindeutigen Identifizierungscodes 13 der Anzahl von eindeutigen Identifizierungscodes 13 in einer der vorgegebenen Codereihenfolge entsprechenden Reihenfolge an den Gegenständen angebracht werden, die Zuordnung der eindeutigen Identifizierungscodes 13 zu den Gegenständen 5 bereits vor dem Anbringen der eindeutigen Identifizierungscodes 13 an die Gegenstände 5 bekannt und beispielsweise in der Zentraleinheit 27 gespeichert sein. Insbesondere kann mithilfe der Codereihenfolge und der Gegenständereihenfolge und dem Umstand, dass die eindeutigen Identifizierungscodes 13 der Anzahl von eindeutigen Identifizierungscodes 13 in einer der vorgegebenen Codereihenfolge entsprechenden Reihenfolge an den Gegenständen angebracht werden, die Zuordnung der eindeutigen Identifizierungscodes 13 zu den gegenstandsbezogenen Daten bereits vor dem Anbringen der eindeutigen Identifizierungscodes 13 an die Gegenstände 5 bekannt und beispielsweise in der Zentraleinheit 27 gespeichert sein. Dies ist insbesondere dann vorteilhaft, wenn sich die gegenstandsbezogenen Daten der Gegenstände 5 oder zumindest für einige Gegenstandspaare voneinander unterscheiden. Insbesondere kann in diesem Fall die Zuordnung der eindeutigen Identifizierungscodes 13 zu den gegenstandsbezogenen Daten vor dem Anbringen der Anzahl von eindeutigen Identifizierungscodes 13 aus der Menge von eindeutigen Identifizierungscodes 13 an der Anzahl von Gegenständen 5 bei weiterführenden Verfahrensschritten berücksichtigt werden. Weiter kann dann, wenn die aktuelle Zuordnung der eindeutigen Identifizierungscodes 13 zu den gegenstandsbezogenen Daten bei der vorgegebenen Codereihenfolge und dann, wenn die eindeutigen Identifizierungscodes 13 der Anzahl von eindeutigen Identifizierungscodes 13, insbesondere nacheinander, in einer der vorgegebenen Codereihenfolge entsprechenden Reihenfolge an den Gegenständen angebracht werden, auf die aktuelle Zuordnung der eindeutigen Identifizierungscodes 13 zu den gegenstandsbezogenen Daten vor dem Anbringen der Anzahl von eindeutigen Identifizierungscodes 13 aus der Menge von eindeutigen Identifizierungscodes 13 an der Anzahl von Gegenständen Einfluss genommen werden. Insbesondere können die Gegenstände 5 anhand disjunkter Eigenschaften gruppiert werden, wobei die Gegenstände 5 einer Gruppe von Gegenständen mit einer bestimmten disjunkten Eigenschaft in der Gegenständereihenfolge aneinander angrenzen. In diesem Fall kann der Speicherbedarf der Zuordnung der eindeutigen Identifizierungscodes 13 zu den gegenstandsbezogenen Daten deutlich reduziert werden, da beispielsweise lediglich der erste Gegenstand einer bestimmten Gruppe von Gegenständen mit einer bestimmten disjunkten Eigenschaft innerhalb der Gegenständereihenfolge und der letzte Gegenstand der bestimmten Gruppe von Gegenständen mit der bestimmten disjunkten Eigenschaft innerhalb der Gegenständereihenfolge sowie die disjunkte Eigenschaft beispielsweise in der Zentraleinheit 27 gespeichert werden müssen.

In einer alternativen Ausführungsform des erfindungsgemäßen Verfahrens kann das Anbringen der Anzahl von eindeutigen Identifizierungscodes 13 aus der Menge von eindeutigen Identifizierungscodes 13 an der Anzahl von Gegenständen in dem dritten Schritt 103 ein Drucken der Anzahl von eindeutigen Identifizierungscodes 13 aus der Menge von eindeutigen Identifizierungscodes 13 auf die Anzahl von Gegenständen umfassen. In diesem Fall können in dem ersten Verfahrensschritt 101 die eindeutigen Identifizierungscodes 13 sowie die Codereihenfolge innerhalb der Zentraleinheit 27 generiert werden - ohne, dass die eindeutigen Identifizierungscodes 13 auf einen Träger, wie beispielsweise ein Etikett 3, abgedruckt werden müssen, und anschließend in dem zweiten Verfahrensschritt in der Zentraleinheit 27 gespeichert werden. Durch diese alternative Ausführungsform des Verfahrens können die eindeutigen Identifizierungscodes 13 an den Gegenständen 5 angebracht werden und gleichzeitig kann auf eine Verwendung von Etiketten 3 verzichtet werden, was zu einem besonders ressourcenschonenden Verfahren führt.

In einem vierten Schritt 104 wird der erste angebrachte eindeutige Identifizierungscode 13 "0001" aus der Menge von eindeutigen Identifizierungscodes 13 und der letzte angebrachte eindeutige Identifizierungscode 13 "1000", der als Teil einer Zusatzinformation an dem entsprechenden Gegenstand 5 angebracht vorliegt, mithilfe der Erfassungseinheit 17 optisch erfasst.

In dem vierten Schritt 104 kann alternativ auch der erste angebrachte eindeutige Identifizierungscode 13 "0001" aus der Menge von eindeutigen Identifizierungscodes 13 und die relativen Positionen in der vorgegebenen Codereihenfolge des ersten angebrachten eindeutigen Identifizierungscodes 13 "0001" zu dem ersten angebrachten eindeutigen Identifizierungscode 13 "0001" und zu dem letzten angebrachten eindeutigen Identifizierungscode 13 "1000" erfasst werden. Die relativen Positionen bilden hierbei einen Teil der Zusatzinformationen, die in diesem Beispiel manuell in die Erfassungseinheit eingegeben werden können. In dem hier beschriebenen Beispiel ist die relative Position zu dem ersten angebrachten eindeutigen Identifizierungscode 13 "0001" null, d.h., der optisch erfasste eindeutige Identifizierungscode 13 aus der Menge von eindeutigen Identifizierungscodes 13 entspricht in der vorgegebenen Codereihenfolge dem ersten angebrachten eindeutigen Identifizierungscode 13. Weiter ist in dem hier beschriebenen Beispiel die relative Position zu dem letzten angebrachten eindeutigen Identifizierungscode 13 "1000" neunhundertneunundneunzig.

Außerdem kann in dem vierten Schritt 104 alternativ der letzte angebrachte eindeutige Identifizierungscode 13 "1000" aus der Menge von eindeutigen Identifizierungscodes 13 und die relativen Positionen in der vorgegebenen Codereihenfolge des letzten angebrachten eindeutigen Identifizierungscodes 13 "1000" zu dem ersten angebrachten eindeutigen Identifizierungscode 13 "0001" und zu dem letzten angebrachten eindeutigen Identifizierungscode 13 "1000" erfasst werden. Die relativen Positionen bilden hierbei einen Teil der Zusatzinformationen, die in diesem Beispiel manuell in die Erfassungseinheit eingegeben werden können. In dem hier beschriebenen Beispiel ist die relative Position zu dem letzten angebrachten eindeutigen Identifizierungscode 13 "1000" null, d.h., der optisch erfasste eindeutige Identifizierungscode 13 aus der Menge von eindeutigen Identifizierungscodes 13 entspricht in der vorgegebenen Codereihenfolge dem letzten angebrachten eindeutigen Identifizierungscode 13. Weiter ist in dem hier beschriebenen Beispiel die relative Position zu dem ersten angebrachten eindeutigen Identifizierungscode 13 "0001" neunhundertneunundneunzig.

Die beiden zuletzt genannten Alternativen können besonders vorteilhaft sein, da in diesen Ausführungsbeispielen der jeweils optisch erfasste eindeutige Identifizierungscode 13 nicht Teil der Anzahl von eindeutigen Identifizierungscodes 13 sein muss. Beispielsweise kann der optisch erfasste eindeutige Identifizierungscode 13 aus der Menge von eindeutigen Identifizierungscodes 13 in der vorgegebenen Codereihenfolge nach dem letzten angebrachten eindeutigen Identifizierungscode 13 vorgesehen sein oder der optisch erfasste eindeutige Identifizierungscode 13 aus der Menge von eindeutigen Identifizierungscodes 13 ist in der vorgegebenen Codereihenfolge vor dem ersten angebrachten eindeutigen Identifizierungscode 13 vorgesehen.

Weiter kann in dem vierten Schritt 104 alternativ auch der erste angebrachte eindeutige Identifizierungscode 13 "0001" aus der Menge von eindeutigen Identifizierungscodes 13 und der letzte angebrachte eindeutige Identifizierungscode 13 "1000", der als Teil einer Zusatzinformation an dem entsprechenden Gegenstand 5 angebracht vorliegt und auch als weiterer eindeutiger Identifizierungscode 13 bezeichnet werden kann, mithilfe der Erfassungseinheit 17 optisch erfasst werden und zusätzlich die relative Position in der vorgegebenen Codereihenfolge des optisch erfassten ersten angebrachten eindeutigen Identifizierungscodes 13 zu dem ersten angebrachten eindeutigen Identifizierungscode 13 und die relative Position in der vorgegebenen Codereihenfolge des optisch erfassten letzten angebrachten eindeutigen Identifizierungscodes 13 zu dem letzten angebrachten eindeutigen Identifizierungscode 13 erfasst werden. In dem hier beschriebenen Beispiel ist die relative Position zu dem ersten angebrachten eindeutigen Identifizierungscode 13 "0001" null, d.h., der optisch erfasste eindeutige Identifizierungscode 13 aus der Menge von eindeutigen Identifizierungscodes 13 entspricht in der vorgegebenen Codereihenfolge dem ersten angebrachten eindeutigen Identifizierungscode 13. Weiter ist in dem hier beschriebenen Beispiel die relative Position zu dem letzten angebrachten eindeutigen Identifizierungscode 13 "1000" ebenfalls null, d.h., der optisch erfasste zweite eindeutige Identifizierungscode 13 aus der Menge von eindeutigen Identifizierungscodes 13 entspricht in der vorgegebenen Codereihenfolge dem letzten angebrachten eindeutigen Identifizierungscode 13.

Weiter werden in einem fünften Schritt 105 gegenstandsbezogenen Daten, die in Form des QR-Codes 15 an den Gegenständen 5 der Anzahl von Gegenständen 5 angebracht sind, mithilfe der Erfassungseinheit 17 optisch erfasst. Die an der Anzahl von Gegenständen 5 angebrachten QR-Codes 15 sind identisch. Da die QR-Codes 15 identisch sind, muss lediglich ein QR-Code 15 der QR-Codes optisch erfasst werden und es können auf einfache und zeiteffiziente Weise die gegenstandsbezogenen Daten mithilfe der Erfassungseinheit 17 optisch erfasst werden.

In einem sechsten Schritt 106 wird der mithilfe der Erfassungseinheit 17 optisch erfasste erste angebrachte eindeutige Identifizierungscode 13 "0001", der mithilfe der Erfassungseinheit 17 optisch erfasste letzte angebrachte eindeutige Identifizierungscode 13 "1000" und die mithilfe der Erfassungseinheit 17 optisch erfassten gegenstandsbezogenen Daten in der Erfassungseinheit 17 gespeichert. Das Speichern des optisch erfassten ersten angebrachten eindeutigen Identifizierungscodes 13 "0001", des optisch erfassten letzten angebrachten eindeutigen Identifizierungscodes 13 "1000" und der optisch erfassten gegenstandsbezogenen Daten in der Erfassungseinheit 17 gewährleistet einen Betrieb der Erfassungseinheit 17 selbst dann, wenn diese in einem Offlinezustand ist, in dem die Erfassungseinheit 17 über keine Kommunikationsschnittstelle Daten, die den optisch erfassten ersten angebrachten eindeutigen Identifizierungscode 13 "0001", den optisch erfassten letzten angebrachten eindeutigen Identifizierungscode 13 "1000" und die optisch erfassten gegenstandsbezogenen Daten repräsentieren, an die Zentraleinheit senden kann.

In einem siebten Schritt 107 wird der mithilfe der Erfassungseinheit 17 optisch erfasste erste angebrachte eindeutige Identifizierungscode 13 "0001", der mithilfe der Erfassungseinheit 17 optisch erfasste letzte angebrachte eindeutige Identifizierungscode 13 "1000" und die mithilfe der Erfassungseinheit 17 optisch erfassten gegenstandsbezogenen Daten an die Zentraleinheit 27 übermittelt und in der Zentraleinheit 27 gespeichert. Das Übermitteln und Speichern des mithilfe der Erfassungseinheit 17 optisch erfassten ersten angebrachten eindeutigen Identifizierungscodes 13 "0001", des mithilfe der Erfassungseinheit 17 optisch erfassten letzten angebrachten eindeutigen Identifizierungscodes 13 "1000" und die mithilfe der Erfassungseinheit 17 optisch erfassten gegenstandsbezogenen Daten an die Zentraleinheit 27 hat den Vorteil, dass der mithilfe der Erfassungseinheit 17 optisch erfasste erste angebrachte eindeutige Identifizierungscode 13 "0001", der mithilfe der Erfassungseinheit 17 optisch erfasste letzte angebrachte eindeutige Identifizierungscode 13 "1000" und die mithilfe der Erfassungseinheit 17 optisch erfassten gegenstandsbezogenen Daten für weitere Auswertungen genutzt werden kann. Beispielsweise kann auf die angebrachten eindeutigen Identifizierungscodes 13 anhand des optisch erfassten ersten angebrachten eindeutigen Identifizierungscodes 13 "0001" und des optisch erfassten letzten angebrachten eindeutigen Identifizierungscode 13 "1000" rückgeschlossen werden. Die mithilfe der Erfassungseinheit 17 optisch erfassten gegenstandsbezogenen Daten können beispielsweise einem Benutzer der Erfassungseinheit 17, insbesondere zu einem späteren Zeitpunkt, beispielsweise in einem Geschäft, angezeigt werden.

Weiter wird in dem siebten Schritt durch die Zentraleinheit 17 auf die angebrachten eindeutigen Identifizierungscodes 13 anhand des optisch erfassten ersten angebrachten eindeutigen Identifizierungscodes 13 "0001" und des optisch erfassten letzten angebrachten eindeutigen Identifizierungscodes 13 "1000" rückgeschlossen. Da eindeutigen Identifizierungscodes 13 die Codereihenfolge bilden und diese in der Zentraleinheit 17 gespeichert ist, kann darauf rückgeschlossen werden, dass zusätzlich zu dem optisch erfassten ersten angebrachten eindeutigen Identifizierungscode 13 "0001" und zusätzlich zu dem optisch erfassten letzten angebrachten eindeutigen Identifizierungscode 13 "1000" auch die weiteren eindeutigen Identifizierungscodes 13 der Anzahl von eindeutigen Identifizierungscodes 13, nämlich die eindeutigen Identifizierungscodes 13 "0002" bis "0999", an der Anzahl von Gegenständen angebracht sind. Durch ein wie hier beschriebenes Rückschließen auf die angebrachten eindeutigen Identifizierungscodes 13 wird ein Rückschließen auf die angebrachten eindeutigen Identifizierungscodes 13 insbesondere im Vergleich zu einem optischen Erfassen jedes einzelnen angebrachten eindeutigen Identifizierungscodes 13 deutlich vereinfacht und beschleunigt. Im vorliegend beschriebenen Fall wird auf die angebrachten eindeutigen Identifizierungscodes 13 so rückgeschlossen, dass zunächst die Position des ersten angebrachten eindeutigen Identifizierungscodes 13 innerhalb der Codereihenfolge und die Position des letzten angebrachten eindeutigen Identifizierungscodes 13 innerhalb der Codereihenfolge bestimmt wird und anhand dieser Information auf die Positionen der angebrachten eindeutigen Identifizierungscodes 13 innerhalb der Codereihenfolge und sodann auf die angebrachten eindeutigen Identifizierungscodes 13 selbst rückgeschlossen wird.

In einem achten Schritt 108 werden die in der Zentraleinheit 27 gespeicherten gegenstandsbezogenen Daten den angebrachten eindeutigen Identifizierungscodes 13 der Anzahl von eindeutigen Identifizierungscodes 13 zugeordnet. Insbesondere werden jedem eindeutigen Identifizierungscode 13 der Anzahl von eindeutigen Identifizierungscodes 13 die gegenstandsbezogenen Daten zugeordnet und diese Zuordnung in der Zentraleinheit 27 gespeichert. Somit kann für jeden eindeutigen Identifizierungscode 13 auf die gegenstandsbezogenen Daten rückgeschlossen werden.

In einem neunten Schritt 109 wird ein an einem Gegenstand 5 angebrachter eindeutiger Identifizierungscode 13 der Anzahl von eindeutigen Identifizierungscodes 13 mithilfe der Erfassungseinheit 17 optisch erfasst und an die Zentraleinheit 27 übermittelt. In einem zehnten Schritt 110 wird in der Zentraleinheit 27 dieser angebrachte eindeutige Identifizierungscode 13 mit in der Zentraleinheit 27 gespeicherten und als angebracht gekennzeichneten eindeutigen Identifizierungscodes 13 verglichen. Für den Fall, dass der in dem neunten Schritt 109 optisch erfasste eindeutige Identifizierungscode 13 bereits in der Zentraleinheit gespeichert ist und als angebracht gekennzeichnet ist, werden dem Benutzer der Erfassungseinheit 17 in einem elften Schritt 111 die dem eindeutigen Identifizierungscode 13 zugeordneten gegenstandsbezogenen Daten auf der Anzeigeeinheit 23 der Erfassungseinheit 17 angezeigt.

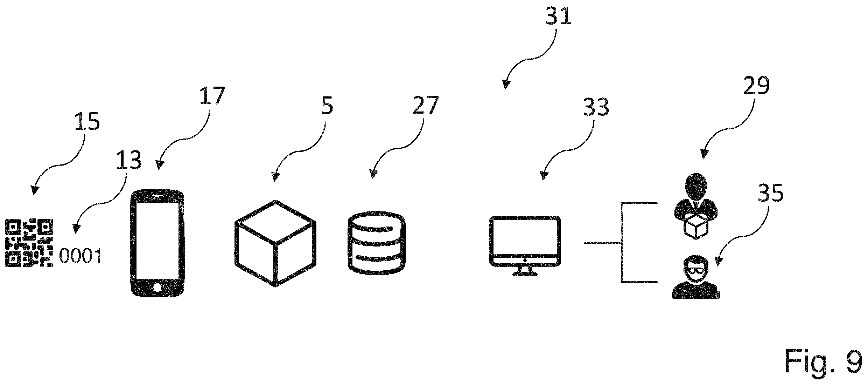

Figur 9 zeigt eine schematische Ansicht einer Ausführungsform eines erfindungsgemäßen Systems 31. Das System 31 ist angepasst die Anzahl von eindeutigen Identifizierungscodes 13 aus der Menge von eindeutigen Identifizierungscodes 13 und die QR-Codes 15 an der Anzahl von Gegenständen 5 anzubringen. Das System umfasst die Erfassungseinheit 17 und Mittel zur Ausführung der oben beschriebenen Ausführungsform des Verfahrens. Die Mittel weisen unter anderem die Zentraleinheit 27 auf. Außerdem weisen die Mittel eine zweite Anzeigeeinheit 33 auf, die die dem optisch erfassten eindeutigen Identifizierungscode 13 zugeordneten gegenstandsbezogenen Daten anzeigen kann. Neben dem ersten Benutzer 29 ist in Figur 9 ein zweiter Benutzer 35 dargestellt. Beispielsweise ist vorgesehen, dass der erste Benutzer 29 sich, beispielsweise mithilfe der Erfassungseinheit 17, als erster Benutzer 29 identifizieren kann und dann, wenn er sich als erster Benutzer 29 identifiziert hat, lediglich einen Teil der gegenstandsbezogenen Daten, wie beispielsweise ein Ablaufdatum, angezeigt werden. Weiter ist beispielsweise vorgesehen, dass der zweite Benutzer 35 sich, beispielsweise mithilfe der Erfassungseinheit 17, als zweiter Benutzer 35 identifizieren kann und dann, wenn er sich als zweiter Benutzer 35 identifiziert hat, die gesamten gegenstandsbezogenen Daten, wie beispielsweise ein Herstellungsdatum und ein Ablaufdatum, angezeigt werden. Der erste Benutzer 29 kann auch als Endkunde und der zweite Benutzer 35 als Experte bezeichnet werden.

Das hier beschriebene Verfahren wird von der Erfassungseinheit 17 und Mitteln des Systems zum Anbringen der Anzahl von eindeutigen Identifizierungscodes 13 aus der Menge von eindeutigen Identifizierungscodes 13 an der Anzahl von Gegenständen ausgeführt. Weiter ist ein Computerprogramm vorgesehen, das Befehle umfasst, die bewirken, dass das erfindungsgemäße System die Schritte des erfindungsgemäßen Verfahrens ausführt. Außerdem ist ein computerlesbares Medium vorgesehen, auf dem das Computerprogramm gespeichert ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

Die Erfindung ist durch die nachstehenden Ansprüche definiert.

### Bezugszeichen

- 1: Etikettenrolle
- 3: Etikett
- 5: Gegenstand
- 7: Fördervorrichtung
- 9: Förderband
- 11: Förderrolle
- 13: eindeutiger Identifizierungscode
- 15: QR-Code
- 17: Erfassungseinheit
- 19: erster Teil eines Etiketts
- 21: zweiter Teil eines Etiketts
- 23: erste Anzeigeeinheit
- 25: Übermittlungsfeld
- 27: Zentraleinheit
- 29: erster Benutzer
- 31: System
- 33: zweite Anzeigeeinheit
- 35: zweiter Benutzer

## Patentansprüche

1. Verfahren zum Anbringen einer Anzahl von eindeutigen Identifizierungscodes (13) aus einer Menge von eindeutigen Identifizierungscodes (13) an einer Anzahl von Gegenständen,
wobei sich die eindeutigen Identifizierungscodes (13) voneinander unterscheiden,
wobei die eindeutigen Identifizierungscodes (13) eine vorgegebene Codereihenfolge bilden, die einen ersten eindeutigen Identifizierungscode (13) und einen letzten eindeutigen Identifizierungscode (13) definiert,
wobei das Verfahren die folgenden Schritte aufweist:
Anbringen der Anzahl von eindeutigen Identifizierungscodes (13) aus der Menge von eindeutigen Identifizierungscodes (13) an der Anzahl von Gegenständen, sodass an jedem Gegenstand (5) ein eindeutiger Identifizierungscode (13) angebracht wird,
Optisches Erfassen eines eindeutigen Identifizierungscodes (13) aus der Menge von den angebrachten eindeutigen Identifizierungscodes (13) mithilfe einer Erfassungseinheit (17) und Erfassen einer Zusatzinformation mithilfe der Erfassungseinheit (17),
Rückschließen auf die angebrachten eindeutigen Identifizierungscodes (13) anhand des optisch erfassten eindeutigen Identifizierungscodes (13) und der erfassten Zusatzinformation und dass der erste angebrachte eindeutige Identifizierungscode (13) und der letzte angebrachte eindeutige Identifizierungscode (13) mithilfe der Erfassungseinheit (17) optisch erfasst werden, wobei eine Anzahl von Etiketten (3) aus einer Menge von Etiketten (3) vorgesehen ist, wobei jedes Etikett (3) der Menge von Etiketten (3) einen eindeutigen Identifizierungscode (13) der Menge von eindeutigen Identifizierungscodes (13) aufweist, wobei die Menge von Etiketten (3) eine vorgegebene Etikettenreihenfolge bildet, wobei die Etikettenreihenfolge der Codereihenfolge entspricht, sodass in der Etikettenreihenfolge ein erstes Etikett (3) mit dem ersten eindeutigen Identifizierungscode (13) und ein letztes Etikett (3) mit dem letzten eindeutigen Identifizierungscode (13) vorgesehen sind, wobei das Anbringen der Anzahl von eindeutigen Identifizierungscodes (13) aus der Menge von eindeutigen Identifizierungscodes (13) an der Anzahl von Gegenständen ein Anbringen der Anzahl von Etiketten (3) aus der Menge von Etiketten (3) an der Anzahl von Gegenständen umfasst, sodass an jedem Gegenstand (5) ein Etikett (3) angebracht wird, wobei das optische Erfassen des eindeutigen Identifizierungscodes (13) aus der Menge von eindeutigen Identifizierungscodes (13) ein optisches Erfassen eines Etiketts (3) aus der Menge von Etiketten (3) mithilfe der Erfassungseinheit (17) umfasst, sodass der eindeutige Identifizierungscode (13) des optisch erfassten Etiketts (3) erfasst wird.

2. Verfahren nach dem vorhergehenden Anspruch,
wobei das Erfassen der Zusatzinformation ein optisches Erfassen eines weiteren eindeutigen Identifizierungscodes (13) aus der Menge von eindeutigen Identifizierungscodes (13) umfasst

3. Verfahren nach einem der vorhergehenden Ansprüche,
wobei das Erfassen der Zusatzinformation ein Erfassen der relativen Position in der vorgegebenen Codereihenfolge des optisch erfassten eindeutigen Identifizierungscodes (13) zu dem ersten angebrachten eindeutigen Identifizierungscode (13) und zu dem letzten angebrachten eindeutigen Identifizierungscode (13) umfasst.

4. Verfahren nach einem der Ansprüche 2 oder 3,
wobei das Erfassen der Zusatzinformation ein Erfassen der relativen Position in der vorgegebenen Codereihenfolge des optisch erfassten eindeutigen Identifizierungscodes (13) zu dem ersten angebrachten eindeutigen Identifizierungscode (13) umfasst und ein Erfassen der relativen Position in der vorgegebenen Codereihenfolge des optisch erfassten weiteren eindeutigen Identifizierungscodes (13) zu dem letzten angebrachten eindeutigen Identifizierungscode (13) umfasst.

5. Verfahren nach einem der vorhergehenden Ansprüche,
wobei das Verfahren außerdem den folgenden Schritt aufweist:
Speichern des optisch erfassten eindeutigen Identifizierungscodes (13) und der Zusatzinformation in der Erfassungseinheit (17),
und/oder
wobei das Verfahren außerdem den folgenden Schritt aufweist:
Übermitteln des optisch erfassten eindeutigen Identifizierungscodes (13) und der Zusatzinformation an eine Zentraleinheit (27).

6. Verfahren nach einem der vorhergehenden Ansprüche,
wobei der optisch erfasste eindeutige Identifizierungscode (13) aus der Menge von eindeutigen Identifizierungscodes (13) in der vorgegebenen Codereihenfolge nach dem letzten angebrachten eindeutigen Identifizierungscode (13) vorgesehen ist, oder
wobei der optisch erfasste eindeutige Identifizierungscode (13) aus der Menge von eindeutigen Identifizierungscodes (13) in der vorgegebenen Codereihenfolge vor dem ersten angebrachten eindeutigen Identifizierungscode (13) vorgesehen ist.

7. Verfahren nach einem der Ansprüche 1 bis 5,
wobei der optisch erfasste eindeutige Identifizierungscode (13) aus der Menge von eindeutigen Identifizierungscodes (13) in der vorgegebenen Codereihenfolge dem letzten angebrachten eindeutigen Identifizierungscode (13) entspricht, oder
wobei der optisch erfasste eindeutige Identifizierungscode (13) aus der Menge von eindeutigen Identifizierungscodes (13) in der vorgegebenen Codereihenfolge dem ersten angebrachten eindeutigen Identifizierungscode (13) entspricht.

8. Verfahren nach einem der vorhergehenden Ansprüche,
wobei der Anzahl von Gegenständen gegenstandsbezogene Daten zugeordnet sind, wobei das Verfahren außerdem die folgenden Schritte aufweist:
Erfassen der gegenstandsbezogenen Daten und
Übermitteln der gegenstandsbezogenen Daten an die Zentraleinheit (27).

9. Verfahren nach Anspruch 8,
wobei das Erfassen der gegenstandsbezogenen Daten ein optisches Erfassen aufweist, und/oder
wobei das Erfassen der gegenstandsbezogenen Daten ein manuelles Erfassen aufweist.

10. Verfahren nach einem der Ansprüche 8 oder 9
wobei das Verfahren außerdem den folgenden Schritt aufweist:
Zuordnen der erfassten gegenstandsbezogenen Daten zu den angebrachten eindeutigen Identifizierungscodes (13).

11. Verfahren nach einem der vorhergehenden Ansprüche,
wobei die Anzahl von Gegenständen eine vorgegebene Gegenständereihenfolge bilden, die einen ersten Gegenstand (5) der Anzahl von Gegenständen (5) und einen letzten Gegenstand (5) der Anzahl von Gegenständen (5) definiert, wobei die eindeutigen Identifizierungscodes (13) der Anzahl von eindeutigen Identifizierungscodes (13) nacheinander in einer der vorgegebenen Codereihenfolge entsprechenden Reihenfolge an den Gegenständen angebracht werden, sodass an dem ersten Gegenstand (5) der erste eindeutige Identifizierungscode (13) und an dem letzten Gegenstand (5) der letzte eindeutige Identifizierungscode (13) angebracht wird.

12. Verfahren nach einem der Ansprüche 1 bis 12,
wobei das Verfahren außerdem den folgenden Schritt aufweist: Herstellen der Menge von Etiketten (3) so, dass die Etiketten (3) nacheinander in der vorgegebenen Etikettenreihenfolge hergestellt werden,
und/oder.
wobei das Anbringen der Anzahl von Etiketten (3) an der Anzahl von Gegenständen ein Kleben umfasst.

13. Verfahren nach einem der Ansprüche 1 bis 4, 5 bis 11,
wobei das Anbringen der Anzahl von eindeutigen Identifizierungscodes (13) aus der Menge von eindeutigen Identifizierungscodes (13) an der Anzahl von Gegenständen ein Drucken der Anzahl von eindeutigen Identifizierungscodes (13) aus der Menge von eindeutigen Identifizierungscodes (13) auf die Anzahl von Gegenständen umfasst.

14. Verfahren nach einem der Ansprüche 8 bis 13,
wobei das Verfahren außerdem die folgenden Schritte aufweist:
optisches Erfassen eines eindeutigen Identifizierungscodes (13);
Rückschließen anhand des optisch erfassten eindeutigen Identifizierungscodes (13) auf die dem optisch erfassten eindeutigen Identifizierungscode (13) zugeordneten gegenstandsbezogene Daten; und
Anzeigen der dem optisch erfassten eindeutigen Identifizierungscode (13) zugeordneten gegenstandsbezogene Daten.

## Claims

1. Method for attaching a number of unique identification codes (13) from a set of unique identification codes (13) to a number of items,
wherein the unique identification codes (13) differ from one another,
wherein the unique identification codes (13) form a predetermined code order, which defines a first unique identification code (13) and a last unique identification code (13),
wherein the method has the following steps:
attaching the number of unique identification codes (13) from the set of unique identification codes (13) to the number of items, so that a unique identification code (13) is attached to each item (5),
optically detecting a unique identification code (13) from the set of the attached unique identification codes (13) with the help of a detection unit (17) and detecting an additional piece of information with the help of the detection unit (17),
inferring the attached unique identification codes (13) by means of the optically detected unique identification code (13) and the detected additional information, and the first attached unique identification code (13) and the last attached unique identification code (13) are optically detected with the help of the detection unit (17), wherein a number of labels (3) is provided from a set of labels (3), wherein each label (3) of the set of labels (3) has a unique identification code (13) of the set of unique identification codes (13), wherein the set of labels (3) form a predetermined label order, wherein the label order corresponds to the code order, so that a first label (3) having the first unique identification code (13) and a last label (3) having the last unique identification code (13) are provided in the label order, wherein the attachment of the number of unique identification codes (13) from the set of unique identification codes (13) to the number of items comprises an attachment of the number of labels (3) from the set of labels (3) to the number of items, so that a label (3) is attached to each item (5), wherein the optical detection of the unique identification code (13) from the set of unique identification codes (13) comprises optically detecting a label (3) from the set of labels (3) with the help of the detection unit (17), so that the unique identification code (13) of the optically detected label (3) is detected.

2. Method according to the preceding claim,
wherein the detection of the additional information comprises optically detecting a further unique identification code (13) from the set of unique identification codes (13).

3. Method according to one of the preceding claims,
wherein the detection of the additional information comprises detecting the relative position, within the predetermined code sequence, of the optically detected unique identification code (13) with respect to the first attached unique identification code (13) and the last attached unique identification code (13).

4. Method according to one of claims 2 or 3,
wherein the detection of the additional information comprises detecting the relative position, within the predetermined code order, of the optically detected unique identification code (13) with respect to the first attached unique identification code (13) and detecting the relative position, within the predetermined code order, of the further optically detected unique identification code (13) with respect to the last attached unique identification code (13).

5. Method according to one of the preceding claims,
wherein the method also has the following step:
storing the optically detected unique identification code (13) and the additional information in the detection unit (17),
and/or
wherein the method also has the following step:
transmitting the optically detected unique identification code (13) and the additional information to a central unit (27).

6. Method according to one of the preceding claims,
wherein the optically detected unique identification code (13) from the set of unique identification codes (13) is provided in the predetermined code order after the last attached unique identification code (13), or
wherein the optically detected unique identification code (13) from the set of unique identification codes (13) is provided before the first attached unique identification code (13) in the predetermined code order.

7. Method according to one of claims 1 to 5,
wherein the optically detected unique identification code (13) from the set of unique identification codes (13) corresponds to the last attached unique identification code (13) in the predetermined code order, or
wherein the optically detected unique identification code (13) from the set of unique identification codes (13) corresponds in the predetermined code order to the first attached unique identification code (13).

8. Method according to one of the preceding claims,
wherein the number of items are assigned item-related data, wherein the method also has the following steps:
detecting the item-related data and
transmitting the item-related data to the central unit (27).

9. Method according to claim 8,
wherein the detection of the item-related data has an optical detection, and/or
wherein the detection of the item-related data has a manual detection.

10. Method according to claim 8 or 9,
wherein the method also has the following step:
assigning the detected item-related data to the attached unique identification codes (13).

11. Method according to one of the preceding claims,
wherein the number of items form a predetermined item order, which defines a first item (5) of the number of items (5) and a last item (5) of the number of items (5), wherein the unique identification codes (13) of the number of unique identification codes (13) are attached to the items one after the other in an order corresponding to the predetermined code order, so that the first unique identification code (13) is attached to the first item (5) and the last unique identification code (13) is attached to the last item (5).

12. Method according to one of claims 1 to 12,
wherein the method also has the following step: producing the set of labels (3) such that the labels (3) are produced one after the other in the predetermined label order,
and/or
wherein attaching the number of labels (3) to the number of items comprises glueing.

13. Method according to one of claims 1 to 4, 5 to 11,
wherein attaching the number of unique identification codes (13) from the set of unique identification codes (13) to the number of items comprises printing the number of unique identification codes (13) from the set of unique identification codes (13) to the number of items.

14. Method according to one of claims 8 to 13,
wherein the method also has the following steps.
optically detecting a unique identification code (13);
inferring item-related dated assigned to the optically detected unique identification code (13) by means of the optically detected unique identification code (13); and
showing the item-related data assigned to the optically detected unique identification code (13).

## Revendications

1. Procédé d'application d'un nombre de codes d'identification uniques (13) issus d'une quantité de codes d'identification uniques (13) sur un nombre d'objets,
dans lequel les codes d'identification uniques (13) sont différents les uns des autres,
dans lequel les codes d'identification uniques (13) forment un ordre de codes prédéfini, qui définit un premier code d'identification unique (13) et un dernier code d'identification unique (13),
dans lequel le procédé présente les étapes suivantes :
l'application du nombre de codes d'identification uniques (13) issus de la quantité de codes d'identification uniques (13) sur le nombre d'objets si bien qu'un code d'identification unique (13) est appliqué sur chaque objet (5),
la détection optique d'un code d'identification unique (13) issu de la quantité des codes d'identification uniques (13) appliqués à l'aide d'une unité de détection (17) et la détection d'une information supplémentaire à l'aide de l'unité de détection (17),
la déduction des codes d'identification uniques (13) appliqués à l'aide du code d'identification unique (13) détecté optiquement et de l'information supplémentaire détectée et que le premier code d'identification unique (13) appliqué et le dernier code d'identification unique (13) appliqué sont détectés optiquement à l'aide de l'unité de détection (17), dans lequel un nombre d'étiquettes (3) issues d'une quantité d'étiquettes (3) est prévu, dans lequel chaque étiquette (3) de la quantité d'étiquettes (3) présente un code d'identification unique (13) de la quantité de codes d'identification uniques (13), dans lequel la quantité d'étiquettes (3) forme un ordre d'étiquettes prédéfini, dans lequel l'ordre d'étiquettes correspond à l'ordre de codes, si bien qu'une première étiquette (3) avec le premier code d'identification unique (13) et une dernière étiquette (3) avec le dernier code d'identification unique (13) sont prévues dans l'ordre d'étiquettes, dans lequel l'application du nombre de codes d'identification uniques (13) issus de la quantité de codes d'identification uniques (13) sur le nombre d'objets comprend une application du nombre d'étiquettes (3) issues de la quantité d'étiquettes (3) sur le nombre d'objets si bien qu'une étiquette (3) est appliquée sur chaque objet (5), dans lequel la détection optique du code d'identification unique (13) issu de la quantité de codes d'identification uniques (13) comprend une détection optique d'une étiquette (3) issue de la quantité d'étiquettes (3) à l'aide de l'unité de détection (17), si bien que le code d'identification unique (13) de l'étiquette (3) détectée optiquement est détecté.

2. Procédé selon la revendication précédente,
dans lequel la saisie de l'information supplémentaire comprend une détection optique d'un autre code d'identification unique (13) issu de la quantité de codes d'identification uniques (13).

3. Procédé selon l'une quelconque des revendications précédentes,
dans lequel la détection de l'information supplémentaire comprend une détection de la position relative dans l'ordre de codes prédéfini du code d'identification unique (13) détecté optiquement par rapport au premier code d'identification unique (13) appliqué et au dernier code d'identification unique (13) appliqué.

4. Procédé selon l'une quelconque des revendications 2 ou 3,
dans lequel la détection de l'information supplémentaire comprend une détection de la position relative dans l'ordre de codes prédéfini du code d'identification unique (13) détecté optiquement par rapport au premier code d'identification unique (13) appliqué et comprend une détection de la position relative dans l'ordre de codes prédéfini du code d'identification unique (13) supplémentaire détecté optiquement par rapport au dernier code d'identification unique (13) appliqué.

5. Procédé selon l'une quelconque des revendications précédentes,
dans lequel le procédé présente par ailleurs l'étape suivante :
le stockage du code d'identification unique (13) détecté optiquement et de l'information complémentaire dans l'unité de détection (17),
et/ou
dans lequel le procédé présente par ailleurs l'étape suivante :
la transmission du code d'identification unique (13) détecté optiquement et de l'information supplémentaire à une unité centrale (27).

6. Procédé selon l'une quelconque des revendications précédentes,
dans lequel le code d'identification unique (13) détecté optiquement issu de la quantité de codes d'identification uniques (13) est prévu dans l'ordre de codes prédéfini après le dernier code d'identification unique (13) appliqué, ou
dans lequel le code d'identification unique (13) détecté optiquement issu de la quantité de codes d'identification uniques (13) est prévu dans l'ordre de codes prédéfini avant le premier code d'identification unique (13) appliqué.

7. Procédé selon l'une quelconque des revendications 1 à 5,
dans lequel le code d'identification unique (13) détecté optiquement issu de la quantité de codes d'identification uniques (13) dans l'ordre de codes prédéfini correspond au dernier code d'identification unique (13) appliqué, ou
dans lequel le code d'identification unique (13) détecté optiquement issu de la quantité de codes d'identification uniques (13) dans l'ordre de codes prédéfini correspond au premier code d'identification unique (13) appliqué.

8. Procédé selon l'une quelconque des revendications précédentes,
dans lequel des données relatives à l'objet sont associées au nombre d'objets, dans lequel le procédé présente par ailleurs les étapes suivantes :
la détection des données relatives à l'objet et
la transmission des données relatives à l'objet à l'unité centrale (27).

9. Procédé selon la revendication 8,
dans lequel la détection des données relatives à l'objet présente une détection optique, et/ou
dans lequel la détection des données relatives à l'objet présente une détection manuelle.

10. Procédé selon l'une quelconque des revendications 8 ou 9,
dans lequel le procédé présente par ailleurs l'étape suivante :
l'association des données relatives à l'objet détectées aux codes d'identification uniques (13) appliqués.

11. Procédé selon l'une quelconque des revendications précédentes,
dans lequel le nombre d'objets forment un ordre d'objets prédéfini, qui définit un premier objet (5) du nombre d'objets (5) et un dernier objet (5) du nombre d'objets (5), dans lequel les codes d'identification uniques (13) du nombre de codes d'identification uniques (13) sont appliqués successivement sur les objets dans un ordre correspondant à l'ordre de codes prédéfini si bien que le premier code d'identification unique (13) est appliqué sur le premier objet (5) et le dernier code d'identification unique (13) est appliqué sur le dernier objet (5).

12. Procédé selon l'une quelconque des revendications 1 à 12,
dans lequel le procédé présente par ailleurs l'étape suivante : la fabrication de la quantité d'étiquettes (3) de telle sorte que les étiquettes (3) sont fabriquées successivement dans l'ordre d'étiquettes prédéfini, et/ou.
dans lequel l'application du nombre d'étiquettes (3) sur le nombre d'objets comprend un collage.

13. Procédé selon l'une quelconque des revendications 1 à 4, 5 à 11,
dans lequel l'application du nombre de codes d'identification uniques (13) issu de la quantité de codes d'identification uniques (13) sur le nombre d'objets comprend une impression du nombre de codes d'identification uniques (13) issus de la quantité de codes d'identification uniques (13) sur le nombre d'objets.

14. Procédé selon l'une quelconque des revendications 8 à 13,
dans lequel le procédé présente par ailleurs les étapes suivantes :
la détection optique d'un code d'identification unique (13) ;
la déduction, à l'aide du code d'identification unique (13) détecté optiquement, des données relatives à l'objet associées au code d'identification unique (13) détecté optiquement ; et
l'affichage des données relatives à l'objet associées au code d'identification unique (13) détecté optiquement.
